# EUROPEAN PATENT APPLICATION

(11) **EP 4 842 033 A1**
(43) Date of publication of application: **18.11.2026**
(21) Application number: 25760791.1
(22) Date of filing: 17.02.2025
(51) Int. Cl.: H04W 12/72

(54) **COMMUNICATION METHOD AND RELATED APPARATUS**

(30) Priority: 29.02.2024 CN 202410235137
(71) Applicant: Huawei Technologies Co., Ltd., Shenzhen, Guangdong 518129 (CN)
(72) Inventor: ZHANG, Zheng, Shenzhen, Guangdong 518129 (CN); ZHANG, Bo, Shenzhen, Guangdong 518129 (CN); WEI, Xinpeng, Shenzhen, Guangdong 518129 (CN)
(74) Representative: Goddar, Heinz J.
(86) International application number: PCT/CN2025/077635
(87) International publication number: WO 2025/180249

(57) **Abstract**

This application provides a communication method and a related apparatus, to facilitate secure openness of operator network information. The method includes: A first network element sends a first request message to a second network element. The first request message includes first identification information, the first request message is used to request energy information, and the energy information indicates energy consumed by at least one network element corresponding to the first identification information. The second network element determines, based on the first identification information, whether the first network element is allowed to obtain the energy information. The second network element sends the energy information to the first network element when the first network element is allowed to obtain the energy information.

## Description

This application claims priority to Chinese Patent Application No. 202410235137.9, filed with the China National Intellectual Property Administration on February 29, 2024 and entitled "COMMUNICATION METHOD AND RELATED APPARATUS", which is incorporated herein by reference in its entirety.

### TECHNICAL FIELD

This application relates to the communication field, and in particular, to a communication method and a related apparatus.

### BACKGROUND

Operator network information refers to large-scale datasets of users gathered and managed by operators, originating from network infrastructure within their operator networks.

Currently, the operator network information can be made open for access, allowing third-party application function network elements to subscribe to the operator network information. However, such openness may raise privacy-leakage concerns. If data within the operator network is leaked, security of the operator network is threatened.

### SUMMARY

This application provides a communication method and a related apparatus, to implement secure openness of operator network information.

According to a first aspect, a communication method is provided. The method may be performed by a second network element. The second network element is, for example, a network exposure function network element, or may be a component (for example, a processor, a chip, or a chip system) configured in the network exposure function network element, or may be a logical module or software that can implement a whole or part of the second network element. This is not limited in this application.

The method includes: receiving a first request message from a first network element, where the first request message includes first identification information, the first request message is used to request energy information, and the energy information indicates energy consumed by at least one network element corresponding to the first identification information; determining, based on the first identification information, whether the first network element is allowed to obtain the energy information; and sending the energy information to the first network element when the first network element is allowed to obtain the energy information.

In this application, the first network element is, for example, an application function network element outside an operator network. The first network element requests to obtain the energy information, which may be understood as that the application function network element requests to obtain information indicating energy consumed by at least one network element, where the at least one network element is a network element corresponding to the first identification information. The energy consumed by the at least one network element may be replaced with energy efficiency of the at least one network element.

According to the technical solutions of this application, the second network element performs verification on whether the first network element is allowed to obtain the energy information, and sends the energy information to the first network element when the verification succeeds. In this way, a problem of energy information leakage caused when an unauthorized application function network element obtains internal energy information of the operator network can be avoided, thereby implementing secure openness of operator network information.

With reference to the first aspect, in some implementations of the first aspect, the first identification information includes identification information of a first terminal device, and the at least one network element corresponding to the first identification information is a network element serving the first terminal device. In this application, the energy information that the first network element requests to obtain indicates energy consumed by the network element serving the first terminal device.

In this application, the identification information of the first terminal device is a first identity of the first terminal device, and the first identity is used to uniquely identify the first terminal device in a system to which the at least one network element belongs and outside the system. For example, the first identity of the first terminal device is a globally unique temporary identity of the first terminal device.

Optionally, the first identification information may further include identification information of a network element type, and the at least one network element corresponding to the first identification information is a network element of the network element type that serves the first terminal device. The network element type is, for example, an access and mobility management function network element, a session management network element, or a user plane function network element.

Optionally, the first identification information may further include identification information of a network, and the at least one network element corresponding to the first identification information is a network element in the network that serves the first terminal device. For example, if the identification information of the network is identification information of a 5th-generation mobile communication (5th-generation mobile communication) network (referred to as a 5G network for short), the at least one network element corresponding to the first identification information is a network element in the 5G network that serves the first terminal device.

Optionally, the first identification information may further include identification information of a slice type, and the at least one network element corresponding to the first identification information is a network element in the slice that serves the first terminal device.

With reference to the first aspect, in some implementations of the first aspect, the identification information of the first terminal device is the globally unique temporary identity of the first terminal device. The determining, based on the first identification information, whether the first network element is allowed to obtain the energy information includes: determining, based on a subscription permanent identifier of the first terminal device corresponding to the globally unique temporary identity of the first terminal device, whether the first network element is allowed to obtain the energy information.

In this application, the second network element determines, based on second identity information of the first terminal device corresponding to the globally unique temporary identity of the first terminal device, whether the first network element is allowed to obtain the energy information. The second identity information of the first terminal device is used to uniquely identify the first terminal device in the system to which the at least one network element belongs. For example, the second identity information of the first terminal device is the subscription permanent identifier of the first terminal device.

With reference to the first aspect, in some implementations of the first aspect, the determining, based on the subscription permanent identifier of the first terminal device corresponding to the globally unique temporary identity of the first terminal device, whether the first network element is allowed to obtain the energy information includes: determining, depending on whether the subscription permanent identifier of the first terminal device belongs to a first list, whether the first network element is allowed to obtain the energy information. The first list includes a subscription permanent identifier of one or more terminals, and the first network element is allowed to obtain information indicating energy consumed by a network element serving the one or more terminals.

With reference to the first aspect, in some implementations of the first aspect, the first request message includes a first authorization token, the first authorization token includes terminal identification information, the first authorization token indicates energy information that the first network element is authorized to obtain, and the energy information that the first network element is authorized to obtain indicates energy consumed by a network element serving a terminal device corresponding to the terminal identification information. The determining, based on the first identification information, whether the first network element is allowed to obtain the energy information includes: determining, depending on whether the terminal identification information is consistent with the identification information of the first terminal device, whether the first network element is allowed to obtain the energy information.

With reference to the first aspect, in some implementations of the first aspect, the first identification information includes identification information of a network element type, and the at least one network element corresponding to the first identification information is a network element of the network element type. In this application, the energy information that the first network element requests to obtain indicates energy consumed by the network element of the network element type.

Optionally, the first identification information may further include identification information of a network, and the at least one network element corresponding to the first identification information is a network element of the network element type in the network.

Optionally, the first identification information may further include identification information of a slice, and the at least one network element corresponding to the first identification information is a network element of the network element type that serves the slice.

Optionally, the first identification information may further include identification information of a second terminal device, and the at least one network element corresponding to the first identification information is a network element of the network element type that serves the second terminal device. The identification information of the second terminal device is, for example, a globally unique temporary identity of the second terminal device.

With reference to the first aspect, in some implementations of the first aspect, the determining, based on the first identification information, whether the first network element is allowed to obtain the energy information includes: determining, depending on whether the identification information of the network element type belongs to a second list, whether the first network element is authorized to obtain the energy information. The second list includes identification information of one or more network element types, and the first network element is allowed to obtain information indicating energy consumed by a network element of the one or more network element types.

With reference to the first aspect, in some implementations of the first aspect, the first identification information includes identification information of a network, and the at least one network element corresponding to the first identification information is a network element in the network. In this application, the energy information that the first network element requests to obtain indicates energy consumed by the network element in the network.

Optionally, the first identification information may further include identification information of a network element type, and the at least one network element corresponding to the first identification information is a network element of the network element type in the network.

Optionally, the first identification information may further include identification information of a slice, and the at least one network element corresponding to the first identification information is a network element in the network that serves the slice.

Optionally, the first identification information may further include identification information of a second terminal device, and the at least one network element corresponding to the first identification information is a network element in the network that serves the second terminal device.

With reference to the first aspect, in some implementations of the first aspect, the determining, based on the first identification information, whether the first network element is allowed to obtain the energy information includes: determining, depending on whether the identification information of the network belongs to a third list, whether the first network element is allowed to obtain the energy information. The third list includes identification information of one or more networks, and the first network element is allowed to obtain information indicating energy consumed by a network element in the one or more networks.

With reference to the first aspect, in some implementations of the first aspect, the first identification information includes identification information of a slice, and the at least one network element corresponding to the first identification information is a network element serving the slice.

Optionally, the first identification information may further include identification information of a network element type, and the at least one network element corresponding to the first identification information is a network element of the network element type that serves the slice.

Optionally, the first identification information may further include identification information of a network, and the at least one network element corresponding to the first identification information is a network element in the network that serves the slice.

Optionally, the first identification information may further include identification information of a second terminal device, and the at least one network element corresponding to the first identification information is a network element in the slice that serves the second terminal device.

With reference to the first aspect, in some implementations of the first aspect, the determining, based on the first identification information, whether the first network element is allowed to obtain the energy information includes: determining, depending on whether the identification information of the slice belongs to a fourth list, whether the first network element is allowed to obtain the energy information. The fourth list includes identification information of one or more slices, and the first network element is allowed to obtain information indicating energy consumed by a network element serving the one or more slices.

With reference to the first aspect, in some implementations of the first aspect, the determining, based on the first identification information, whether the first network element is allowed to obtain the energy information includes: determining, depending on whether identification information of the at least one network element corresponding to the first identification information belongs to a fifth list, whether the first network element is allowed to obtain the energy information. The fifth list includes identification information of one or more network elements, and the first network element is allowed to obtain information indicating energy consumed by the one or more network elements.

With reference to the first aspect, in some implementations of the first aspect, the method further includes: obtaining the energy information from a first communication apparatus, for example, obtaining the energy information from the first communication apparatus when the first network element is allowed to obtain the energy information, for example, sending a second request message to the first communication apparatus when the first network element is allowed to obtain the energy information, where the second request message is used to request the energy information, and the second request message includes the first identification information or the identification information of the at least one network element corresponding to the first identification information; and receiving the energy information from the first communication apparatus.

In this application, the first communication apparatus is a network function service producer (network function service producer, NFp) or OAM functional entity. The NFp is, for example, a network data analysis function network element. The first communication apparatus is configured to collect the energy consumed by the at least one network element and generate the energy information.

With reference to the first aspect, in some implementations of the first aspect, the second request message includes a second authorization token, the second authorization token includes the first identification information or the identification information of the at least one network element corresponding to the first identification information, the second authorization token indicates energy information that the first communication apparatus authorizes the second network element to obtain, and the energy information that the second network element is authorized to obtain indicates the energy consumed by the at least one network element corresponding to the first identification information.

With reference to the first aspect, in some implementations of the first aspect, before the sending the second request message to the first communication apparatus, the method further includes: sending a third request message to a third network element, where the third request message includes the first identification information or the identification information of the at least one network element corresponding to the first identification information, and the third request message is used to request authorization for obtaining the energy information; and receiving the second authorization token from the third network element.

In this application, the third network element is, for example, a network repository function network element. The second network element sends the third request message to the third network element, and the third network element sends the second authorization token to the second network element when determining that the first communication apparatus allows the second network element to obtain the energy information.

According to a second aspect, a communication method is provided. The method may be performed by a first communication apparatus. The first communication apparatus is, for example, an NFp or OAM functional entity, or may be a component (for example, a processor, a chip, or a chip system) configured in the NFp or OAM functional entity, or may be a logical module or software that can implement a whole or part of the NFp or OAM functional entity. This is not limited in this application.

The method includes: receiving a second request message from a second network element, where the second request message is used to request energy information, and the second request message includes first identification information or identification information of at least one network element corresponding to the first identification information; generating the energy information based on energy consumed by the at least one network element corresponding to the first identification information; and sending the energy information to the second network element.

In this application, the second network element is, for example, a network exposure function network element. When determining that a first network element is allowed to obtain the energy information, the second network element sends the second request message to the first communication apparatus to request the energy information. The first network element is, for example, an application function network element outside an operator network. The first communication apparatus may obtain, based on the first identification information, the energy consumed by the at least one network element corresponding to the first identification information, and generate the energy information.

According to the technical solutions of this application, the first communication apparatus receives the second request message when the second network element determines that the first network element is allowed to obtain the energy information, and then the first communication apparatus generates the energy information requested by the first network element, and sends the energy information to the first network element via the second network element. In this way, a problem of energy information leakage caused when an unauthorized application function network element obtains internal energy information of the operator network can be avoided, thereby implementing secure openness of operator network information.

With reference to the second aspect, in some implementations of the second aspect, the first identification information includes identification information of a first terminal device, and the at least one network element corresponding to the first identification information is a network element serving the first terminal device. In this application, the energy information that the first network element requests to obtain indicates energy consumed by the network element serving the first terminal device.

Optionally, the first identification information may further include identification information of a network element type, and the at least one network element corresponding to the first identification information is a network element of the network element type that serves the first terminal device. The network element type is, for example, an access and mobility management function network element, a session management network element, or a user plane function network element.

Optionally, the first identification information may further include identification information of a network, and the at least one network element corresponding to the first identification information is a network element in the network that serves the first terminal device. For example, if the identification information of the network is identification information of a 5G network, the at least one network element corresponding to the first identification information is a network element in the 5G network that serves the first terminal device.

Optionally, the first identification information may further include identification information of a slice type, and the at least one network element corresponding to the first identification information is a network element in the slice that serves the first terminal device.

Optionally, the identification information of the first terminal device is a globally unique temporary identity of the first terminal device.

Optionally, a first request message includes a first authorization token, the first authorization token includes terminal identification information, the first authorization token indicates energy information that the first network element is authorized to obtain, and the energy information that the first network element is authorized to obtain indicates energy consumed by a network element serving a terminal device corresponding to the terminal identification information.

With reference to the second aspect, in some implementations of the second aspect, the first identification information includes identification information of a network element type, and the at least one network element corresponding to the first identification information is a network element of the network element type. In this application, the energy information that the first network element requests to obtain indicates energy consumed by the network element of the network element type.

Optionally, the first identification information may further include identification information of a network, and the at least one network element corresponding to the first identification information is a network element of the network element type in the network.

Optionally, the first identification information may further include identification information of a slice, and the at least one network element corresponding to the first identification information is a network element of the network element type that serves the slice.

Optionally, the first identification information may further include identification information of a second terminal device, and the at least one network element corresponding to the first identification information is a network element of the network element type that serves the second terminal device. The identification information of the second terminal device is, for example, a globally unique temporary identity of the second terminal device.

With reference to the second aspect, in some implementations of the second aspect, the first identification information includes identification information of a network, and the at least one network element corresponding to the first identification information is a network element in the network. In this application, the energy information that the first network element requests to obtain indicates energy consumed by the network element in the network.

Optionally, the first identification information may further include identification information of a network element type, and the at least one network element corresponding to the first identification information is a network element of the network element type in the network.

Optionally, the first identification information may further include identification information of a slice, and the at least one network element corresponding to the first identification information is a network element in the network that serves the slice.

Optionally, the first identification information may further include identification information of a second terminal device, and the at least one network element corresponding to the first identification information is a network element in the network that serves the second terminal device.

With reference to the second aspect, in some implementations of the second aspect, the first identification information includes identification information of a slice, and the at least one network element corresponding to the first identification information is a network element serving the slice.

Optionally, the first identification information may further include identification information of a network element type, and the at least one network element corresponding to the first identification information is a network element of the network element type that serves the slice.

Optionally, the first identification information may further include identification information of a network, and the at least one network element corresponding to the first identification information is a network element in the network that serves the slice.

Optionally, the first identification information may further include identification information of a second terminal device, and the at least one network element corresponding to the first identification information is a network element in the slice that serves the second terminal device.

With reference to the second aspect, in some implementations of the second aspect, the second request message includes a second authorization token, the second authorization token includes the first identification information or the identification information of the at least one network element corresponding to the first identification information, the second authorization token indicates energy information that the first communication apparatus authorizes the second network element to obtain, and the energy information that the second network element is authorized to obtain indicates the energy consumed by the at least one network element corresponding to the first identification information.

It should be understood that the technical solutions in the second aspect of this application correspond to the technical solutions in the first aspect of this application, and beneficial effects achieved by the aspects and corresponding feasible implementations are similar. Details are not described again.

According to a third aspect, a communication apparatus is provided, configured to perform the method in any one of the possible implementations in the foregoing aspects. Specifically, the apparatus includes a module configured to perform the method in any one of the possible implementations in the foregoing aspects.

In a design, the apparatus may include a module in one-to-one correspondence with a method/operation/step/action described in either of the foregoing aspects. The module may be implemented by a hardware circuit, software, or a combination of a hardware circuit and software.

In another design, the apparatus is a communication chip. The communication chip may include an input circuit or an interface configured to send information or data, and an output circuit or an interface configured to receive information or data.

In another design, the apparatus includes a transmitter configured to send information or data, and a receiver configured to receive information or data.

In another design, the apparatus is configured to perform the method in any one of the possible implementations in the foregoing aspects, and the apparatus may be configured in the second network element or the first communication apparatus.

According to a fourth aspect, a communication apparatus is provided, including a processor. The processor is configured to invoke a computer program from a memory and run the computer program, to enable the communication apparatus to perform the method in any one of the possible implementations in the foregoing aspects.

Optionally, the apparatus further includes the memory, and the memory may be configured to store instructions and data. The memory is coupled to the processor. When the processor executes the instructions stored in the memory, the methods described in the foregoing aspects may be implemented.

Optionally, the apparatus further includes a transmitter (transmitter machine) and a receiver (receiver machine). The transmitter and the receiver may be separately disposed, or may be integrated together and referred to as a transceiver (transceiver machine).

According to a fifth aspect, a computer program product is provided. The computer program product includes a computer program (which may also be referred to as code or instructions). When the computer program is run, a computer is enabled to perform the method in any one of the possible implementations in the foregoing aspects.

According to a sixth aspect, a computer-readable storage medium is provided. The computer-readable storage medium stores a computer program (which may also be referred to as code or instructions). When the computer program is run on a computer, the computer is enabled to perform the method in any one of the possible implementations in the foregoing aspects.

According to a seventh aspect, this application provides a chip system. The chip system includes at least one processor configured to support implementation of a function in any one of the foregoing aspects, for example, receiving or processing data in the foregoing method.

In a possible design, the chip system further includes a memory, the memory is configured to store program instructions and data, and the memory is located inside or outside the processor.

Optionally, the chip system may include a chip, or may include a chip and another discrete component.

### BRIEF DESCRIPTION OF DRAWINGS

FIG. 1 is a diagram of an architecture of a communication system suitable for embodiments of this application;
FIG. 2 to FIG. 6 are schematic flowcharts of communication methods according to embodiments of this application; and
FIG. 7 and FIG. 8 are block diagrams of communication apparatuses according to embodiments of this application.

### DESCRIPTION OF EMBODIMENTS

The following describes technical solutions of this application with reference to accompanying drawings.

Before a communication method and a related apparatus according to embodiments of this application are described, the following several points are first described.

First, in the following embodiments, terms and English abbreviations such as AF, NEF, energy information, and network element are all examples provided for ease of description, and should not constitute any limitation on this application. This application does not exclude a possibility of defining, in an existing or future protocol, another term that can implement a same or similar function.

Second, in the following embodiments, first, second, and various numbering are merely used for distinguishing for ease of description, and are not intended to limit the scope of embodiments of this application.

Third, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. The expression "at least one of the following items (pieces)" or a similar expression thereof means any combination of these items, including a singular item (piece) or any combination of plural items (pieces). For example, at least one of a, b, and c may represent a, or b, or c, or a and b, or a and c, or b and c, or a, b, and c, where a, b, and c may be single, or may be plural.

Fourth, "sending" and "receiving" in this application indicate a signal transmission direction. For example, "sending energy information to a first network element" may be understood as that a destination end of the energy information is the first network element, and may include direct sending through an air interface, or indirect sending via another unit or module through an air interface; and "receiving a first request message from the first network element" may be understood as that a source end of the first request message is the first network element, and may include direct receiving from the first network element through an air interface, or indirect receiving from the first network element via another unit or module through an air interface. The "sending" may alternatively be understood as "outputting" of a chip interface, and the "receiving" may alternatively be understood as "inputting" of the chip interface.

In other words, sending and receiving may be performed between devices, for example, between a terminal and an access network device, or may be performed within a device, for example, sending or receiving is performed between components, modules, chips, software modules, or hardware modules within the device through a bus, a cable, or an interface.

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system.

A public land mobile network (public land mobile network, PLMN) is a network established and operated by a government or an operator authorized by the government to provide a land mobile communication service for the public. It is essentially a public network in which a mobile network operator (mobile network operator, MNO) provides a mobile broadband access service for users. The PLMN may also be referred to as an operator network. The PLMN described in embodiments of this application may be specifically a network compliant with the 3rd generation partnership project (3rd generation partnership project, 3GPP) specifications, referred to as a 3GPP network for short. The 3GPP network generally includes but is not limited to a 5G network, a 4th-generation mobile communication (4th-generation mobile communication) network, referred to as a 4G network for short, and another communication system in the future, for example, a 6th-generation mobile communication (6th-generation mobile communication), referred to as a 6G network for short. For ease of description, an example in which the PLMN is a 5G network is used for description in embodiments of this application.

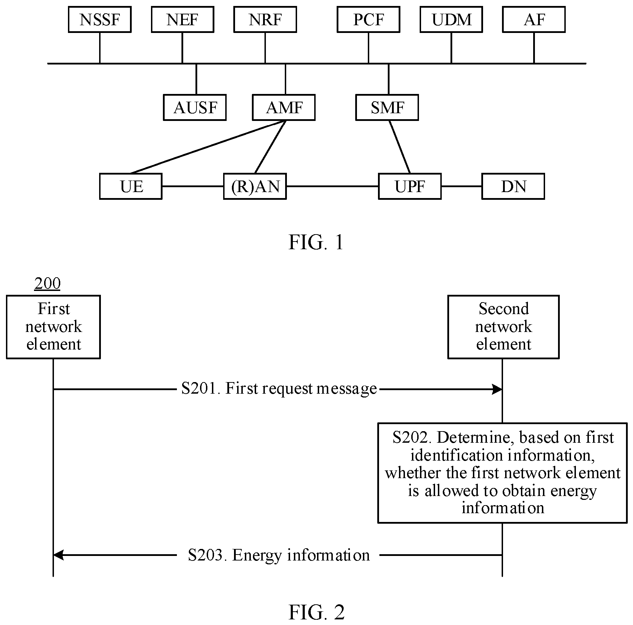

FIG. 1 is a diagram of a network architecture to which this application is applicable. A 5G network architecture based on a service-based architecture (service-based architecture, SBA) in a non-roaming scenario defined in a 3GPP standardization process is used as an example. As shown in the figure, the network architecture may include three parts: a terminal part (for example, user equipment (user equipment, UE) in FIG. 1), a data network (data network, DN), and an operator network (that is, a PLMN) part. The operator network part may include but is not limited to a (radio) access network ((radio) access network, (R)AN) and a core network (core network, CN) part. The following briefly describes functions of devices or network elements of the parts.

The CN part may include but is not limited to the following network elements (which may also be referred to as network functions (network function, NF)): a user plane function (user plane function, UPF) network element, an access and mobility management function (access and mobility management function, AMF) network element, a session management function (session management function, SMF) network element, a unified data management (unified data management, UDM) network element, a network exposure function (network exposure function, NEF) network element, a policy control function (policy control function, PCF) network element, a network repository function (network repository function, NRF) network element, a network slice selection function (network slice selection function, NSSF) network element, and an authentication server function (authentication server function, AUSF) network element. Optionally, the network architecture further includes a network data analysis function (network data analytics function, NWDAF) network element.

The AMF network element is a network element, a module, or a component that provides an access management functionality, and is mainly responsible for a signaling processing part, for example, functionalities such as access control, mobility management, attach and detach, and gateway selection. When providing a service for a session in the terminal, the AMF network element provides a control plane storage resource for the session, to store an identifier of the session, an identifier of an SMF associated with the identifier of the session, and the like.

The SMF network element is a network element, a module, or a component responsible for processing user services, for example, user plane function selection, user plane function redirection, internet protocol (internet protocol, IP) address allocation, bearer establishment, modify, and release, and QoS control.

The UPF network element is responsible for forwarding and receiving of user data in the terminal. The UPF may receive user data from the DN, and transmit the user data to the UE via a RAN node. The UPF network element may further receive user data from the UE via a RAN node, and forward the user data to the DN. Transmission resources and scheduling functionalities in the UPF network element that provide services for the UE are managed and controlled by the SMF network element.

The NEF network element is located between an operator network and a third-party application function network element (or some internal application function network elements), and is responsible for managing openness of network data to the outside. The third-party application function network element needs to access internal data of the operator network via the NEF network element. The NEF correspondingly ensures that it is secure that the third-party application function network element accesses the operator network. The NRF network element supports network function registration and discovery, including network function registration, management, and status detection, to implement automatic management of all network functions. When enabled, each network function needs to register with the NRF to provide services, and registered information includes information such as a type, an address, and a service list of the network function.

The NWDAF network element can collect data from other network functions, collect data from an OAM functional entity, and provide analysis information for other network functions.

The network architecture shown in FIG. 1 further includes an application function (application function, AF) network element. The AF network element refers to various services at an application layer, and may be an internal application service of the operator network, for example, a voice over long term evolution (voice over long-term evolution, VoLTE) application service, or may be a third-party application service, for example, a video server or a game server. The internal AF network element of the operator network is in a same trust domain with other network elements, and can directly interact with and access the other network elements, while the third-party AF network element is not in a same trust domain with other network elements, and needs to access the other network elements via the NEF network element.

The RAN node provided in embodiments of this application may be a base station (base station), a NodeB (NodeB), an evolved NodeB (evolved NodeB, eNodeB, or eNB), a transmission reception point (transmission reception point, TRP), a next-generation NodeB (next-generation NodeB, gNB) in 5G or NR, a RAN node in an open radio access network (open radio access network, O-RAN, or open RAN), or a next-generation base station in a 6th-generation mobile communication technology (6th-generation mobile communication technology, 6G). Alternatively, the RAN node may be a satellite base station in a non-terrestrial network (non-terrestrial network, NTN) communication network, a base station in a future mobile communication system, an access node in a wireless fidelity (wireless fidelity, Wi-Fi) system, or the like. Alternatively, the RAN node may be a module or a unit that completes a part of functions of a base station, for example, may be a central unit (central unit, CU) or a distributed unit (distributed unit, DU). A function of the CU may be implemented by one entity, or may be implemented by different entities. For example, the function of the CU may be further divided. For example, a control plane (control plane, CP) and a user plane (user plane, UP) are separated as a CU control plane (CU-CP) and a CU user plane (CU-UP). The RAN node may be a macro base station, or the RAN node may be a micro base station or an indoor station, or may be a relay node, a donor node, or the like. A specific technology and a specific device form that are used for the RAN node are not limited in this application. The RAN node may also be referred to as an access network device or an access network element. This is not limited in this application.

The terminal provided in embodiments of this application may also be referred to as a terminal device, user equipment, a mobile station, a mobile terminal, or the like. The terminal may be widely used in various scenarios for communication. The scenario includes, for example but not limited to, at least one of the following scenarios: enhanced mobile broadband (enhanced mobile broadband, eMBB), ultra-reliable and low-latency communications (ultra-reliable and low-latency communications, URLLC), massive machine-type communications (massive machine-type communications, mMTC), device-to-device (device-to-device, D2D) communication, vehicle-to-everything (vehicle-to-everything, V2X) communication, machine-type communication (machine-type communication, MTC), internet-of-things (internet-of-things, IoT) communication, virtual reality, augmented reality, industrial control, self-driving, telemedicine, a smart grid, smart furniture, a smart office, a smart wearable, smart transportation, a smart city, or the like. The terminal may be a mobile phone, a tablet computer, a computer with a wireless transceiver function, a wearable device, a vehicle, a helicopter, an airplane, an uncrewed aerial vehicle, a ship, a robot, a robotic arm, a smart household device, or the like. A specific technology and a specific device form that are used for the terminal device are not limited in this application.

The foregoing network elements may be at fixed positions, or may be movable. The network elements may be deployed on land, including indoor or outdoor, handheld, or vehiclemounted forms; may be deployed on water; or may be deployed on airplanes, balloons, and artificial satellites in air. An environment/scenario in which the network elements are located is not limited in this application. The network elements may be deployed in a same or different environments/scenarios. For example, the UE and the RAN node are both deployed on land; or the UE is deployed on land, while the RAN node is deployed on water. Examples are not described herein one by one. A method for communication between the plurality of network elements is not limited in this application.

In embodiments of this application, the network elements shown in FIG. 1 may be hardware devices, or may be software functions operating on dedicated hardware or general-purpose hardware, for example, virtualization functions instantiated on a platform (for example, a cloud platform), or entities including dedicated or general-purpose hardware devices and software functions. Specific forms of the network elements are not limited in this application.

Currently, operator network information can be made open for access, allowing third-party application function network elements to subscribe to the operator network information. However, such openness may raise privacy-leakage concerns. If data within an operator network is leaked, security of the operator network is threatened.

In view of this, embodiments of this application provide a communication method. In the method, an example in which operator network information is energy information is used to describe how to securely expose energy information of an operator network. In the method, a third-party application function network element requests to obtain energy information, and a network exposure function network element performs verification on whether the application function network element is allowed to obtain the requested energy information. If the verification succeeds, the network exposure function network element provides the energy information for the application function network element. In this way, a problem of energy information leakage caused when an unauthorized application function network element obtains energy information related to the operator network can be avoided, thereby implementing secure openness of the energy information related to the operator network.

FIG. 2 is a schematic flowchart of a communication method 200 according to an embodiment of this application. The method 200 may be applied to the system architecture shown in FIG. 1, but this is not limited in this embodiment of this application.

The method 200 includes S201 to S203, and specific steps are as follows:
S201. A first network element sends a first request message to a second network element. The first request message includes first identification information, the first request message is used to request energy information, and the energy information indicates energy consumed by at least one network element corresponding to the first identification information. Correspondingly, the second network element receives the first request message.

In this embodiment of this application, the first network element is, for example, an application function network element outside an operator network, and the second network element is, for example, a network exposure function network element.

With reference to the foregoing descriptions of the network exposure function network element, it can be learned that the network exposure function network element is a network element in the operator network, and is responsible for managing openness of network data to the outside (for example, the application function network element outside the operator network), and the application function network element outside the operator network needs to access internal data of the operator network via the network exposure function network element. Energy consumed by a network element is internal data of the operator network. Therefore, when requesting to obtain internal energy information of the operator network, the application function network element needs to request to obtain the energy information from the network exposure function network element.

A network element in the operator network generates energy consumption, or in other words, consumes energy, when implementing a service function. The network element may be a network element in a core network, for example, an access and mobility management function network element or a user plane function network element. The network element may alternatively be a network element in an access network, for example, a base station.

The operator network may provide a plurality of different types of energy information, for example, energy information of a terminal type, energy information of a network element type, energy information of a network type, or energy information of a slice type. Different types of energy information may alternatively be understood as energy information of different granularities.

In this embodiment of this application, the first identification information corresponds to at least one network element, and the at least one network element is related to a type of the energy information. The first identification information may indicate the type of the energy information.

Optionally, the first identification information includes a type identifier and a first identifier. The type identifier indicates the type of the energy information, the first identifier indicates a specific object of the type, and the specific object corresponds to the at least one network element.

For example, a value of the type identifier is a first value (for example, 001), indicating that the type of the energy information is the terminal type, and the first identifier is identification information of a first terminal device, that is, a specific object of the terminal type indicated by the first identifier is the first terminal device. The identification information of the first terminal device is a first identity of the first terminal device, and the first identity of the first terminal device is used to uniquely identify the first terminal device in a system to which the at least one network element belongs and outside the system. For example, the first identity of the first terminal device is a globally unique temporary identity of the first terminal device. In this example, the at least one network element corresponding to the first terminal device is a network element serving the first terminal device. In other words, the at least one network element corresponding to the first identification information is the network element serving the first terminal device. The energy information indicates energy consumed by the network element serving the first terminal device.

For another example, a value of the type identifier is a second value (for example, 002), indicating that the type of the energy information is the network element type, and the first identifier is identification information of a first network element type, that is, a specific object of the network element type indicated by the first identifier is the first network element type. The first network element type is, for example, an access and mobility management function network element. In this example, the at least one network element corresponding to the first network element type is a network element of the first network element type. In other words, the at least one network element corresponding to the first identification information is the network element of the first network element type. The energy information indicates energy consumed by the network element of the first network element type.

It should be understood that an access and mobility management function network element, a session management function network element, a user plane function network element, and the like may be considered as different types of network elements.

For another example, a value of the type identifier is a third value (for example, 003), indicating that the type of the energy information is a network type, and the first identifier is identification information of a first network, that is, a specific object of the network type indicated by the first identifier is the first network. The first network is, for example, a network of a campus, or a 5G network. In this example, the at least one network element corresponding to the first network is a network element in the first network. In other words, the at least one network element corresponding to the first identification information is the network element in the first network. The energy information indicates energy consumed by the network element in the first network.

For another example, a value of the type identifier is a fourth value (for example, 004), indicating that the type of the energy information is the slice type, and the first identifier is identification information of a first slice, that is, a specific object of the slice type indicated by the first identifier is the first slice. In this example, the at least one network element corresponding to the first slice is a network element serving the first slice. In other words, the at least one network element corresponding to the first identification information is the network element serving the first slice. The energy information indicates energy consumed by the network element serving the first slice.

Optionally, the first identification information further includes a second identifier, and the second identifier further defines a network element range indicated by the first identifier.

With reference to the foregoing example of the terminal type, the first identification information further includes a second identifier, and the second identifier is identification information of a second network element type, for example, identification information of an access network device and/or identification information of a user plane function network element. In this example, the at least one network element corresponding to the first terminal device is a network element of the second network element type that serves the first terminal device. In other words, the at least one network element corresponding to the first identification information includes the network element of the second network element type that serves the first terminal device. The energy information indicates energy consumed by the network element of the second network element type that serves the first terminal device.

With reference to the foregoing example of the network element type, the first identification information further includes a second identifier, and the second identifier is identification information of a second network. In this example, the at least one network element corresponding to the first network element type is a network element of the first network element type in the second network. In other words, the at least one network element corresponding to the first identification information is the network element of the first network element type in the second network. The energy information indicates energy consumed by the network element of the first network element type in the second network.

With reference to the foregoing example of the network type, the first identification information further includes a second identifier, and the second identifier is identification information of a third network element type, for example, identification information of a session management function network element and/or identification information of a user plane function network element. In this example, the at least one network element corresponding to the first network is a network element of the third network element type in the first network. In other words, the at least one network element corresponding to the first identification information is the network element of the first network element type in the first network. The energy information indicates energy consumed by the network element of the first network element type in the first network.

With reference to the foregoing example of the slice type, the first identification information further includes a second identifier, and the second identifier includes identification information of a fourth network element type, for example, identification information of an access network device and identification information of a user plane function network element. In this example, the at least one network element corresponding to the first slice is a network element of the fourth network element type that serves the first slice. In other words, the at least one network element corresponding to the first identification information is the network element of the fourth network element type that serves the first slice. The energy information indicates energy consumed by the network element of the fourth network element type that serves the first slice.

S202. The second network element determines, based on the first identification information, whether the first network element is allowed to obtain the energy information.

To ensure security of openness of the energy information, the network exposure function network element needs to perform verification on the energy information requested by the application function network element, or in other words, the network exposure function network element needs to perform verification on whether the application function network element is allowed to obtain the requested energy information.

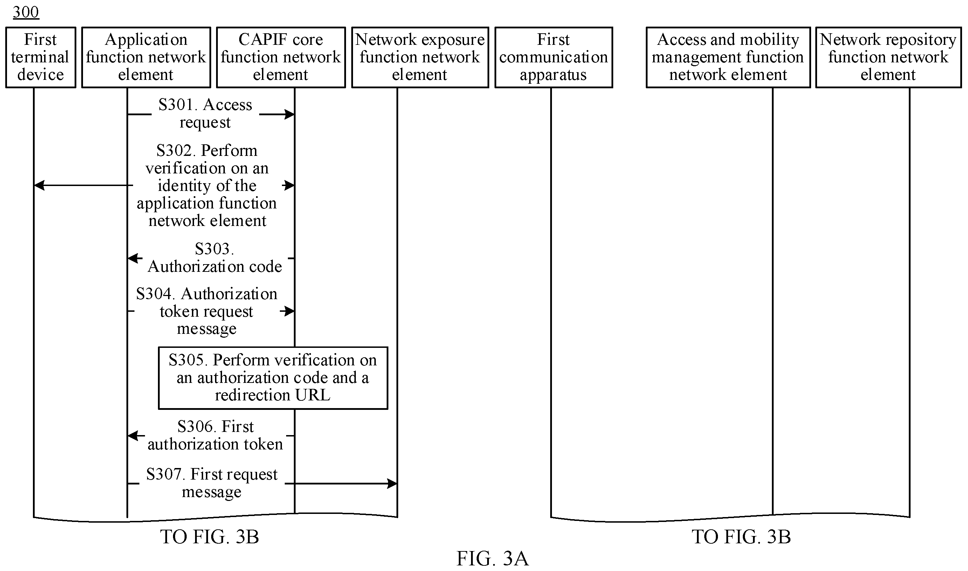

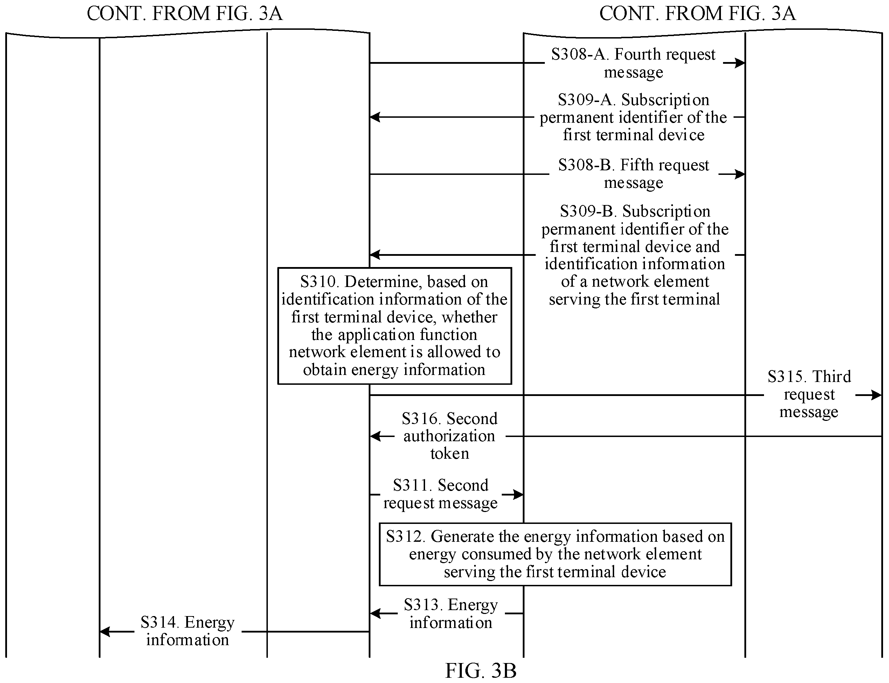

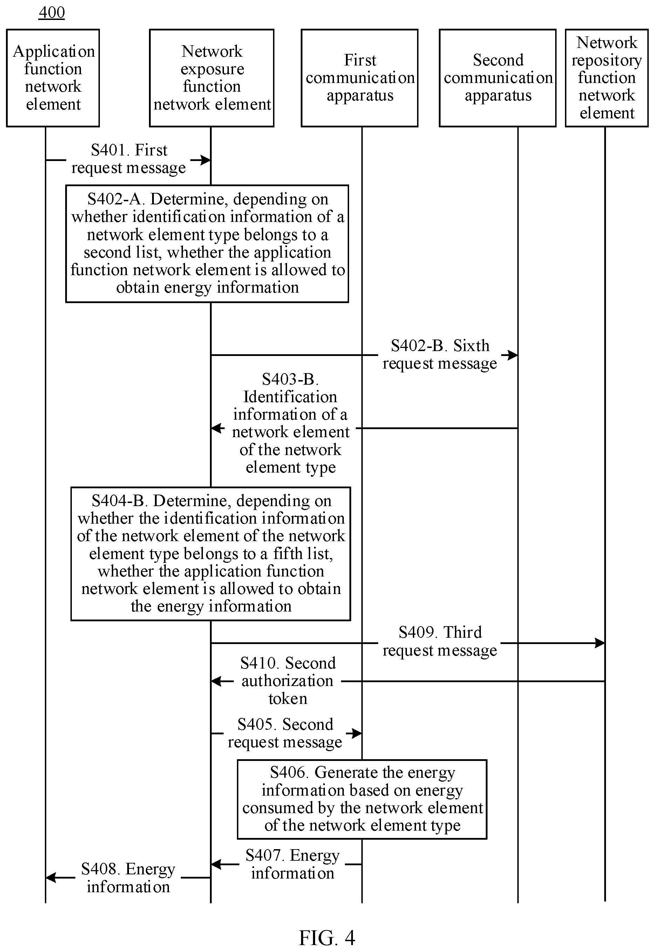

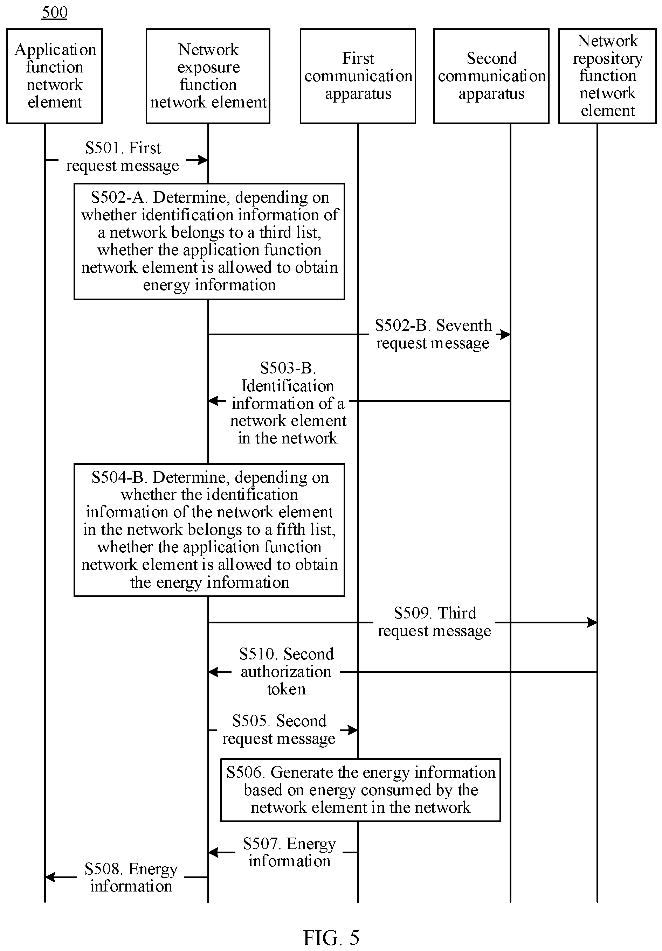

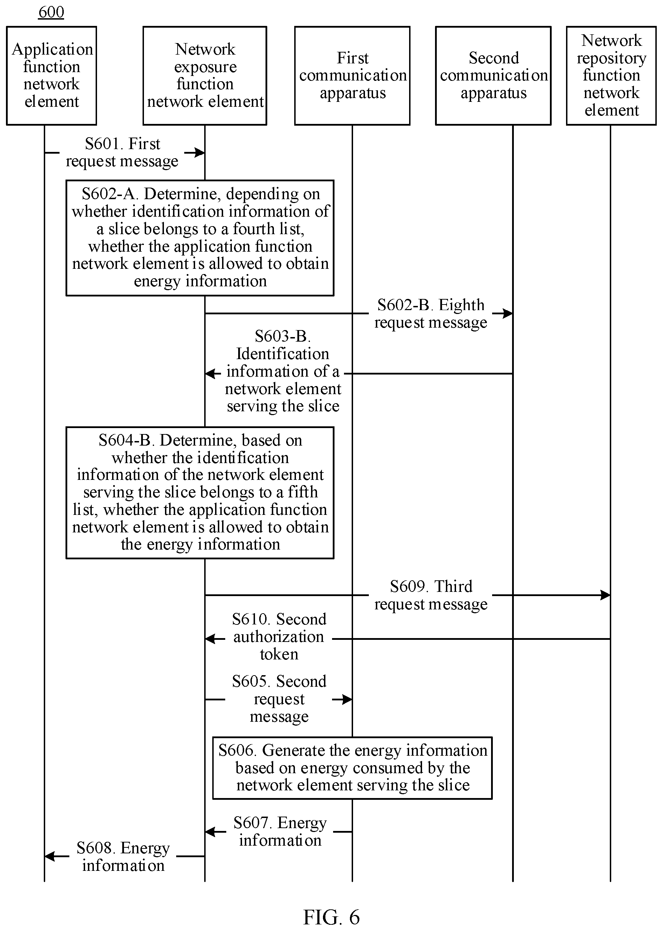

With reference to the descriptions of the first identification information in S201, that the second network element determines, based on the first identification information, whether the first network element is allowed to obtain the energy information includes the following cases:
Case 1: For example, the type identifier in the first identification information indicates that the type of the energy information is the terminal type, and the first identifier is the identification information of the first terminal device. The second network element determines, based on the identification information of the first terminal device, whether the first network element is allowed to obtain the energy information. Alternatively, the second network element determines, based on the network element serving the first terminal device, whether the first network element is allowed to obtain the energy information. For a specific implementation, refer to the following descriptions with reference to FIG. 3A and FIG. 3B. Details are not described herein.
Case 2: For example, the type of the energy information indicated by the type identifier in the first identification information is the network element type, and the first identifier is the identification information of the first network element type. The second network element determines, based on the identification information of the first network element type, whether the first network element is allowed to obtain the energy information. Alternatively, the second network element determines, based on identification information of the network element of the first network element type, whether the first network element is allowed to obtain the energy information. For a specific implementation, refer to the following descriptions with reference to FIG. 4. Details are not described herein.
Case 3: For example, the type of the energy information indicated by the type identifier in the first identification information is the network type, and the first identifier is the identification information of the first network. The second network element determines, based on the identification information of the first network, whether the first network element is allowed to obtain the energy information. Alternatively, the second network element determines, based on identification information of the network element in the first network, whether the first network element is allowed to obtain the energy information. For a specific implementation, refer to the following descriptions with reference to FIG. 5. Details are not described herein.
Case 4: For example, the type of the energy information indicated by the type identifier in the first identification information is the slice type, and the first identifier is the identification information of the first slice. The second network element determines, based on the identification information of the first slice, whether the first network element is allowed to obtain the energy information. Alternatively, the second network element determines, based on identification information of the network element serving the first slice, whether the first network element is allowed to obtain the energy information. For a specific implementation, refer to the following descriptions with reference to FIG. 6. Details are not described herein.

S203. The second network element sends the energy information to the first network element when the first network element is allowed to obtain the energy information. Correspondingly, the first network element receives the energy information.

For example, when the first network element is allowed to obtain the energy information, the second network element obtains the energy information from a first communication apparatus, and sends the energy information to the first network element. The first communication apparatus is, for example, an NFp or OAM functional entity.

For example, that the second network element obtains the energy information from the first communication apparatus includes: The second network element sends a second request message to the first communication apparatus. The second request message is used to request the energy information, and the second request message includes the first identification information or identification information of the at least one network element corresponding to the first identification information. The first communication apparatus sends the energy information to the first communication apparatus based on the second request message.

For example, when the second network element does not obtain the identification information of the at least one network element corresponding to the first identification information, the second request message includes the first identification information. Subsequently, the first communication apparatus may obtain the identification information of the at least one network element corresponding to the first identification information.

For example, when the second network element obtains the identification information of the at least one network element corresponding to the first identification information, the second request message includes the identification information of the at least one network element corresponding to the first identification information.

For example, that the first communication apparatus sends the energy information to the second network element based on the second request message includes: The first communication apparatus obtains, based on the identification information of the at least one network element corresponding to the first identification information, the energy consumed by the at least one network element. The first communication apparatus generates the energy information based on the energy consumed by the at least one network element, and sends the energy information to the second network element.

In this embodiment of this application, the first network element requests to obtain the energy information, and the second network element performs verification on whether the first network element is allowed to obtain the requested energy information. When the verification on the first network element succeeds, the second network element obtains the requested energy information for the first network element. This facilitates secure openness of the energy information of the operator network.

Based on the descriptions of the first identification information in S201, the following separately describes, with reference to FIG. 3A to FIG. 6, methods for obtaining different types of energy information. In the following embodiments, an application function network element corresponds to the first network element in the method 200, and a network exposure function network element corresponds to the second network element in the method 200.

A first communication apparatus in the following embodiments is, for example, an NFp or OAM functional entity. The NFp is, for example, a network data analysis function network element.

A second communication apparatus in the following embodiments is, for example, a network repository function network element or an access network management system.

The following first describes the communication method in embodiments of this application with reference to FIG. 3A and FIG. 3B by using an example in which a type of energy information is a terminal type and a first identifier is identification information of a first terminal device.

FIG. 3A and FIG. 3B are a schematic flowchart of another communication method 300 according to an embodiment of this application. The method 300 is a procedure of authorizing, based on a common application programming interface framework (common application programming interface framework, CAPIF), an application function network element to obtain energy information. Main functions of the CAPIF include a CAPIF core function (CAPIF core function, CCF), an application programming interface (application programming interface, API) invoker (invoker), an API exposing function (API exposing function), an API publishing function (API publishing function), and an API management function (API management function).

The CAPIF core function is mainly responsible for authentication and authorization on API invokers.

The API invoker may be considered as a third-party application service that invokes a 5G network capability, for example, an application function network element. The application function network element may be in a public land mobile network (public land mobile network, PLMN) trust domain, or may be outside the domain. The application function network element in this application is an application function network element outside the PLMN trust domain.

The API exposing function is a provider of service APIs, and is a communication entry of the service APIs to API invokers.

The API publishing function is configured to monitor and query for invocation of service APIs.

During actual deployment, the four functional entities may be combined or disposed as independent devices based on a network condition and an actual requirement. For example, the four functional entities may be selected to be combined as a network exposure function network element. Alternatively, the CAPIF core function may be separately disposed, and the other three functional entities are combined as a network exposure function network element.

The method 300 includes S301 to S316, and specific steps are as follows:
S301. The application function network element sends an access request to the CAPIF core function network element. The access request includes an identifier of a first terminal device and a redirection uniform resource locator (uniform resource locator, URL), and the access request is used to request an authorization code for energy information of the first terminal device. Correspondingly, the CAPIF core function network element receives the access request.
S302. The CAPIF core function network element interacts with the first terminal device to perform verification on an identity of the application function network element.

The performing verification on the identity of the application function network element includes: performing verification on whether the first terminal device accepts the access request of the application function network element.

For example, the CAPIF core function network element sends an identifier of the application function network element to the first terminal device, and the first terminal device performs verification on whether the identifier of the application function network element is in an access-allowed list. If the identifier of the application function network element is in the access-allowed list, the first terminal device indicates, to the CAPIF core function network element, that the identity authentication on the application function network element succeeds.

S303. The CAPIF core function network element sends the authorization code to the application function network element when verifying that the first terminal device accepts the access request of the application function network element. Correspondingly, the application function network element receives the authorization code.

In this step, the CAPIF core function network element redirects to the application function network element by using the redirection URL, and sends the authorization code to the application function network element.

S304. The application function network element sends an authorization token request message to the CAPIF core function network element. The authorization token request message includes an authorization code, the identifier of the first terminal device, and a redirection URL, and the authorization token request message is used to request to obtain an authorization token. Correspondingly, the CAPIF core function network element receives the authorization token request message.

In this step, the authorization code included in the authorization token request message is the authorization code received in S303. The authorization code is used to request authorization for the application function network element to obtain the energy information of the first terminal device. The energy information of the first terminal device includes energy consumed by a network element serving the first terminal device.

S305. The CAPIF core function network element performs verification on the authorization code and the redirection URL.

In this step, the CAPIF core function network element performs verification on the received authorization code, to avoid a security problem caused by authorization code leakage. In addition, the CAPIF core function network element performs verification on whether the redirection URL received in this step matches the URL used to redirect to the application function network element in S303. When the verification succeeds, the CAPIF core function network element generates a first authorization token and performs S306.

S306. The CAPIF core function network element sends the first authorization token to the application function network element. Correspondingly, the application function network element receives the first authorization token.

The first authorization token includes terminal identification information, the first authorization token indicates energy information that the application function network element is authorized to obtain, and the energy information that the application function network element is authorized to obtain indicates energy consumed by a network element serving a terminal device corresponding to the terminal identification information.

In this embodiment of this application, the first authorization token is an authorization token generated by verifying the authorization code. Because the authorization code is used to request authorization for the application function network element to obtain the energy information of the first terminal device, the terminal identification information included in the first authorization token is identification information of the first terminal device, for example, a globally unique temporary identity of the first terminal device.

S307. The application function network element sends a first request message to a network exposure function network element. The first request message includes first identification information and a first authorization token, the first request message is used to request energy information, and the energy information indicates energy consumed by at least one network element corresponding to the first identification information. Correspondingly, the network exposure function network element receives the first request message.

In this embodiment of this application, the first identification information includes the identification information of the first terminal device, the identification information of the first terminal device is first identity information of the first terminal device, and the first identity information of the first terminal device is, for example, the globally unique temporary identity of the first terminal device. The at least one network element corresponding to the first identification information is the network element serving the first terminal device, and there is one or more network elements serving the first terminal device. The first authorization token is the first authorization token obtained in S306, and the first authorization token includes the terminal identification information.

Optionally, the first identification information further includes a second identifier, and the second identifier is identification information of a network element type. In other words, the first identification information further includes the identification information of the network element type. The network element type is a core network element type, for example, a user plane function network element, or the network element type is an access network element type, for example, a base station. In this case, the at least one network element serving the first terminal device includes a network element of the network element type that serves the first terminal device. In other words, the at least one network element corresponding to the first identification information includes the network element of the network element type that serves the first terminal device.

After step S307, the network exposure function network element interacts with an access and mobility management function network element to perform the following S308-A and S309-A, or the network exposure function network element interacts with the access and mobility management function network element to perform the following S308-B and S309-B.

S308-A. The network exposure function network element sends a fourth request message to the access and mobility management function network element. The fourth request message includes the globally unique temporary identity of the first terminal device, and the fourth request message is used to request to obtain a subscription permanent identifier of the first terminal device corresponding to the globally unique temporary identity of the first terminal device. Correspondingly, the access and mobility management function network element receives the fourth request message.

S309-A. The access and mobility management function network element sends the subscription permanent identifier of the first terminal device to the network exposure function network element. Correspondingly, the network exposure function network element receives the subscription permanent identifier of the first terminal device.

Through S308-A and S309-A, the network exposure function network element may obtain an internal identifier of the first terminal device, for example, the subscription permanent identifier of the first terminal device. The subscription permanent identifier of the first terminal device is a unique number of the first terminal device in a home network of the first terminal device, and identifies a real identity of the first terminal device.

S308-B. The network exposure function network element sends a fifth request message to the access and mobility management function network element. The fifth request message includes the globally unique temporary identity of the first terminal device, and the fifth request message is used to request to obtain the subscription permanent identifier of the first terminal device corresponding to the globally unique temporary identity of the first terminal device and identification information of the network element serving the first terminal device. Correspondingly, the access and mobility management function network element receives the fifth request message.

S309-B. The access and mobility management function network element sends the subscription permanent identifier of the first terminal device and the identification information of the network element serving the first terminal device to the network exposure function network element.

Through S308-B and S309-B, the network exposure function network element may not only obtain the subscription permanent identifier of the first terminal device, but also obtain the identification information of the network element serving the first terminal device.

The access and mobility management function network element in S308-A and S309-A or S308-B and S309-B is a network element instance of an access and mobility management function network element serving the first terminal device. The identification information of the network element serving the first terminal device is identification information of a network element instance serving the first terminal device.

Optionally, when the first identification information further includes the identification information of the network element type, the fifth request message in S308-B further includes the identification information of the network element type, and the fifth request message is used to request to obtain the subscription permanent identifier of the first terminal device and identification information of the network element of the network element type that serves the first terminal device. Correspondingly, S309-B includes: The access and mobility management function network element sends the subscription permanent identifier of the first terminal device and the identification information of the network element of the network element type that serves the first terminal device to the network exposure function network element.

S310. The network exposure function network element determines, based on the identification information of the first terminal device, whether the application function network element is allowed to obtain the energy information.

This step may specifically include the following five implementations:
Implementation 1: With reference to the descriptions of S308-A and S309-A, the identification information of the first terminal device is the globally unique temporary identity of the first terminal device, and the network exposure function network element determines, based on the subscription permanent identifier of the first terminal device corresponding to the globally unique temporary identity of the first terminal device, whether the application function network element is allowed to obtain the energy information.

For example, the network exposure function network element determines, depending on whether the subscription permanent identifier of the first terminal device belongs to a first list, whether the application function network element is allowed to obtain the energy information. If the subscription permanent identifier of the first terminal device belongs to the first list, the application function network element is allowed to obtain the energy information, and then the network exposure function network element performs S311. If the subscription permanent identifier of the first terminal device does not belong to the first list, the application function network element is not allowed to obtain the energy information.

The first list includes a subscription permanent identifier of one or more terminal devices, and the application function network element is allowed to obtain information indicating energy consumed by a network element serving the one or more terminal devices.

Implementation 2: With reference to the descriptions of S308-B and S309-B, the network exposure function determines, based on the network element serving the first terminal device, whether the application function network element is allowed to obtain the energy information.

For example, the network exposure function network element determines, depending on whether the identification information of the network element serving the first terminal device belongs to a fifth list, whether the application function network element is allowed to obtain the energy information. If the identification information of the network element serving the first terminal device belongs to the fifth list, the network exposure function network element determines that the application function network element is allowed to obtain the energy information, and then the network exposure function network element performs S311. If the identification information of the network element serving the first terminal device does not belong to the fifth list, the network exposure function network element determines that the application function network element is not allowed to obtain the energy information.

The fifth list includes identification information of one or more network elements, and the application function network element is allowed to obtain information indicating energy consumed by the one or more network elements.

Optionally, when the first identification information further includes the identification information of the network element type, in Implementation 2, the network exposure function network element determines, depending on whether the network element of the network element type that serves the first terminal device belongs to the fifth list, whether the application function network element is allowed to obtain the energy information.

Implementation 3: The network exposure function network element determines, depending on whether the identification information of the first terminal device is consistent with the terminal identification information in the first authorization token, whether the application function network element is allowed to obtain the energy information.

For example, when the identification information of the first terminal device is consistent with the terminal identification information in the first authorization token, the network exposure function determines that the application function network element is allowed to obtain the energy information, and then the network exposure function network element performs S311. When the identification information of the first terminal device is inconsistent with the terminal identification information in the first authorization token, the network exposure function determines that the application function network element is not allowed to obtain the energy information.

It should be understood that, that the identification information of the first terminal device is consistent with the terminal identification information in the first authorization token means that the identification information of the first terminal device and the terminal identification information indicate the same terminal device. The identification information of the first terminal device and the terminal identification information may be in different format, but indicate the same terminal device.

Implementation 4: With reference to Implementation 1 and Implementation 3, for example, the network exposure function network element first determines whether the identification information of the first terminal device is consistent with the terminal identification information in the first authorization token, and when the identification information of the first terminal device is consistent with the terminal identification information in the first authorization token, the network exposure function network element further determines whether the subscription permanent identifier of the first terminal device belongs to the first list. When the subscription permanent identifier of the first terminal device belongs to the first list, the network exposure function network element determines that the application function network element is allowed to obtain the energy information, and then the network exposure function network element performs S311.

Implementation 5: With reference to Implementation 2 and Implementation 3, for example, the network exposure function network element first determines whether the identification information of the first terminal device is consistent with the terminal identification information in the first authorization token, and when the identification information of the first terminal device is consistent with the terminal identification information in the first authorization token, the network exposure function network element further determines whether the identification information of the at least one network element serving the first terminal device belongs to the fifth list. When the identification information of the at least one network element serving the first terminal device belongs to the fifth list, the network exposure function network element determines that the application function network element is allowed to obtain the energy information, and then the network exposure function network element performs S311.

Optionally, when the first identification information further includes the identification information of the network element type, in Implementation 5, when determining that the identification information of the first terminal device is consistent with the terminal identification information in the first authorization token, the network exposure function network element further determines whether the identification information of the network element of the network element type that serves the first terminal device belongs to the fifth list. When the identification information of the network element of the network element type that serves the first terminal device belongs to the fifth list, the network exposure function network element determines that the application function network element is allowed to obtain the energy information.

Optionally, when determining that the application function network element is not allowed to obtain the energy information, the network exposure function network element may send a rejection message to the application function network element. The rejection message indicates that the application function network element is not allowed to obtain the energy information.

S311. The network exposure function network element sends a second request message to a first communication apparatus. The second request message is used to request the energy information. Correspondingly, the first communication apparatus receives the second request message.

In this embodiment of this application, the second request message includes the identification information of the first terminal device or the identification information of the network element serving the first terminal device. The network element serving the first terminal device is the network element instance serving the first terminal device.

With reference to the foregoing Implementation 1, Implementation 3, or Implementation 4, the network exposure function network element does not obtain the identification information of the network element serving the first terminal device. Therefore, the second request message includes the identification information of the first terminal device but does not include the identification information of the network element serving the first terminal device. Subsequently, the first communication apparatus obtains, based on the identification information of the first terminal device, the identification information of the network element serving the first terminal device.

With reference to the foregoing Implementation 2 or Implementation 5, the network exposure function network element obtains the identification information of the network element serving the first terminal device. Therefore, the second request message includes the identification information of the network element serving the first terminal device, that is, the identification information of the at least one network element corresponding to the first identification information. Optionally, the second request message further includes the identification information of the first terminal device.

S312. The first communication apparatus generates the energy information based on the energy consumed by the network element serving the first terminal device.

If the second request message does not include the identification information of the network element serving the first terminal device, before this step, the first communication apparatus needs to obtain, from the access and mobility management function network element, the identification information of the network element serving the first terminal device, and obtain, based on the identification information of the network element serving the first terminal device, the energy consumed by the network element serving the first terminal device. Then, the first communication apparatus generates the energy information based on the energy consumed by the network element serving the first terminal device.

Optionally, when the first identification information further includes the identification information of the network element type, S312 includes: The first communication apparatus generates the energy information based on energy consumed by the network element of the network element type that serves the first terminal device.

Optionally, the energy information includes the subscription permanent identifier of the first terminal device.

S313. The first communication apparatus sends the energy information to the network exposure function network element. Correspondingly, the network exposure function network element receives the energy information.

S314. The network exposure function network element sends the energy information to the application function network element. Correspondingly, the application function network element receives the energy information.

Optionally, the network exposure function network element converts the subscription permanent identifier of the first terminal device in the energy information into an external identifier of the first terminal device, for example, the globally unique temporary identity of the first terminal device.

Optionally, before the network exposure function network element sends the second request message to the first communication apparatus in S311, the method 300 further includes S315: The network exposure function network element sends a third request message to a network repository function network element. The third request message is used to request authorization for obtaining the energy information. Correspondingly, the network repository function network element receives the third request message. In this embodiment of this application, the third request message includes the identification information of the first terminal device or the identification information of the network element serving the first terminal device.

Optionally, after receiving the third request message, the network repository function network element determines whether the first communication apparatus allows the network exposure function network element to obtain the energy information. When it is determined that the first communication apparatus allows the network exposure function network element to obtain the energy information, the method 300 further includes S316: The network repository function network element sends a second authorization token to the network exposure function network element. The second authorization token includes the identification information of the first terminal device or the identification information of the network element serving the first terminal device, the second authorization token indicates energy information that the first communication apparatus authorizes the network exposure function network element to obtain, and the energy information that the first communication apparatus authorizes the network exposure function network element to obtain indicates the energy consumed by the network element serving the first terminal device.

Optionally, the second request message in S311 includes the second authorization token, and the second authorization token includes the identification information of the first terminal device or the identification information of the network element serving the first terminal device. After receiving the second request message, the first communication apparatus checks whether a signature of the second authorization token is valid. When the check succeeds, the first communication apparatus performs S312.

Optionally, when the first identification information further includes the identification information of the network element type, the third request message in S315 includes the identification information of the first terminal device or the identification information of the network element of the network element type that serves the first terminal device. Correspondingly, the second authorization token in S316 includes the identification information of the first terminal device or the identification information of the network element of the network element type that serves the first terminal device, and the energy information that the second authorization token authorizes the network exposure function network element to obtain indicates the energy consumed by the network element of the network element type that serves the first terminal device.

In this embodiment of this application, the application function network element requests the energy information. The energy information indicates the energy consumed by the network element serving the first terminal device. When determining that the application function network element is allowed to obtain the energy information, the network exposure function network element obtains the energy information from the first communication apparatus, and sends the energy information to the application function network element. This facilitates secure openness of energy information of a terminal type of an operator network.

The following describes the communication method in embodiments of this application with reference to FIG. 4 by using an example in which a type identifier of first identification information is a network element type, and a first identifier is identification information of the network element type.

FIG. 4 is a schematic flowchart of still another communication method 400 according to an embodiment of this application. The method 400 includes S401 to S410, and specific steps are as follows:
S401. An application function network element sends a first request message to a network exposure function network element. The first request message includes first identification information, the first request message is used to request energy information, and the energy information indicates energy consumed by at least one network element corresponding to the first identification information. Correspondingly, the network exposure function network element receives the first request message.

In this embodiment of this application, the first identification information includes identification information of a network element type, for example, identification information of an access and mobility management function network element. The at least one network element corresponding to the first identification information is a network element of the network element type, and there is one or more network elements of the network element type.

Optionally, the first identification information further includes a second identifier, and the second identifier is identification information of a network. In other words, the first identification information further includes the identification information of the network. In this case, the at least one network element corresponding to the first identification information is a network element of the network element type in the network.

After S401, the network exposure function network element performs the following S402-A, or the network exposure function network element performs the following S402-B, S403-B, and S404-B.

S402-A. The network exposure function network element determines, depending on whether the identification information of the network element type belongs to a second list, whether the application function network element is allowed to obtain the energy information.

In this embodiment of this application, the network exposure function network element stores the second list, the second list includes identification information of one or more network element types, and the application function network element is allowed to obtain information indicating energy consumed by a network element of the one or more network element types.

When the identification information of the network element type belongs to the second list, the network exposure function network element determines that the application function network element is authorized to obtain the energy information, and then performs S405.

Optionally, when the first identification information further includes the identification information of the network, S402-A includes: The network exposure function network element determines, depending on whether the identification information of the network element type belongs to the second list and whether the identification information of the network belongs to a third list, whether the application function network element is allowed to obtain the energy information.

In this embodiment of this application, the network exposure function network element further stores the third list, the third list includes identification information of one or more networks, and the application function network element is allowed to obtain information indicating energy consumed by a network element in the one or more networks.

When the identification information of the network element type belongs to the second list, and the identification information of the network belongs to the third list, the network exposure function network element determines that the application function network element is allowed to obtain the energy information, and then performs S405.

S402-B. The network exposure function network element sends a sixth request message to a second communication apparatus. The sixth request message includes an identifier of the network element type, and the sixth request message is used to request identification information of the network element of the network element type. Correspondingly, the second communication apparatus receives the sixth request message.

S403-B. The second communication apparatus sends the identification information of the network element of the network element type to the network exposure function network element. Correspondingly, the network exposure function network element receives the identification information of the network element of the network element type.

In S402-B and S403-B, when the network element type includes a core network element type, the second communication apparatus is a network repository function network element, and the network repository function network element sends identification information of a network element of the core network element type to the network exposure function network element based on the sixth request message; and/or when the network element type includes an access network element type, the second communication apparatus is an access network management system, and the access network management system sends identification information of a network element of the access network element type to the network exposure function network element based on the sixth request message.

S404-B. The network exposure function network element determines, depending on whether the identification information of the network element of the network element type belongs to a fifth list, whether the application function network element is authorized to obtain the energy information.

In this embodiment of this application, the network exposure function network element stores the fifth list, the fifth list includes identification information of one or more network elements, and the application function network element is allowed to obtain information indicating energy consumed by the one or more network elements.

When the identification information of the network element of the network element type belongs to the fifth list, the network exposure function network element determines that the application function network element is authorized to obtain the energy information, and then performs S405.

Optionally, when the first identification information further includes the identification information of the network, the sixth request message in S402-B further includes the identification information of the network, and the sixth request message is used to request identification information of the network element of the network element type in the network. Correspondingly, in S403-B, the second communication apparatus sends the identification information of the network element of the network element type in the network to the network exposure function network element based on the sixth request message. Correspondingly, S404-B includes: The network exposure function network element determines, depending on whether the identification information of the network element of the network element type in the network belongs to the fifth list, whether the application function network element is authorized to obtain the energy information. When the identification information of the network element of the network element type in the network belongs to the fifth list, the network exposure function network element determines that the application function network element is authorized to obtain the energy information.

For a processing manner when the application function network element is not allowed to obtain the energy information, refer to the descriptions in the method 300. Details are not described herein again.

S405. The network exposure function network element sends a second request message to a first communication apparatus. The second request message is used to request the energy information. Correspondingly, the first communication apparatus receives the second request message.

In this embodiment of this application, the second request message includes the identification information of the network element type or the identification information of the network element of the network element type.

In this embodiment of this application, the network element type may include one or more network element instances, the network element of the network element type is a network element instance of the network element type, and the identification information of the network element of the network element type is identification information of the network element instance of the network element type.

For example, the network element type is a session management function network element. The session management function network element includes one or more network element instances, and the one or more network element instances are distinguished by using different identification information. For example, an SMF 1 and an SMF 2 represent two different session management network element instances.

With reference to the foregoing descriptions of S402-A, the network exposure function network element does not obtain the identification information of the network element of the network element type. Therefore, the second request message includes the identification information of the network element type. Subsequently, the first communication apparatus obtains the identification information of the network element of the network element type based on the identification information of the network element type.

With reference to the foregoing descriptions of S402-B and S403-B, the network exposure function network element obtains the identification information of the network element of the network element type. Therefore, the second request message includes the identification information of the network element of the network element type. Optionally, the second request message further includes the identification information of the network element type.

Optionally, when the first identification information further includes the identification information of the network, with reference to the foregoing descriptions of S402-A, the second request message includes the identification information of the network element type and the identification information of the network. Alternatively, with reference to the foregoing descriptions of S402-B and S403-B, the second request message includes the identification information of the network element of the network element type in the network.

S406. The first communication apparatus generates the energy information based on energy consumed by the network element of the network element type.

If the second request message does not include the identification information of the network element of the network element type, before this step, the first communication apparatus needs to obtain the identification information of the network element of the network element type from the network repository function network element, and obtain, based on the identification information of the network element of the network element type, the energy consumed by the network element of the network element type. Then, the first communication apparatus generates the energy information based on the energy consumed by the network element of the network element type.

Optionally, when the first identification information further includes the identification information of the network, S406 includes: The first communication apparatus generates the energy information based on energy consumed by the network element of the network element type in the network.

S407. The first communication apparatus sends the energy information to the network exposure function network element. Correspondingly, the network exposure function network element receives the energy information.

S408. The network exposure function network element sends the energy information to the application function network element. Correspondingly, the application function network element receives the energy information.

Optionally, after receiving the energy information, the network exposure function network element deletes sensitive data in the energy information, for example, a network element instance identifier. The network element instance identifier is an internal identifier of a network element.

Optionally, before S405, the method 400 further includes S409: The network exposure function network element sends a third request message to a network repository function network element. The third request message is used to request authorization for obtaining the energy information. Correspondingly, the network repository function network element receives the third request message. In this embodiment of this application, the third request message includes the identification information of the network element type or the identification information of the network element of the network element type.

Optionally, after receiving the third request message, the network repository function network element determines whether the first communication apparatus allows the network exposure function network element to obtain the energy information. When it is determined that the first communication apparatus allows the network exposure function network element to obtain the energy information, the method 400 further includes S410: The network repository function network element sends a second authorization token to the network exposure function network element. The second authorization token includes the identification information of the network element type or the identification information of the network element of the network element type, the second authorization token indicates energy information that the first communication apparatus authorizes the network exposure function network element to obtain, and the energy information that the first communication apparatus authorizes the network exposure function network element to obtain indicates the energy consumed by the network element of the network element type.

Optionally, the second request message in S405 includes the second authorization token, and the second authorization token includes the identification information of the network element type or the identification information of the network element of the network element type. After receiving the second request message, the first communication apparatus checks whether a signature of the second authorization token is valid. When the check succeeds, the first communication apparatus performs S406.

Optionally, when the first identification information further includes the identification information of the network, the third request message in S409 includes the identification information of the network element type and the identification information of the network. Alternatively, the third request message in S409 includes the identification information of the network element of the network element type in the network. Correspondingly, the second authorization token in S410 includes the identification information of the network element type and the identification information of the network. Alternatively, the second authorization token in S408 includes the identification information of the network element of the network element type in the network.

In this embodiment of this application, the application function network element requests the energy information. The energy information indicates the energy consumed by the network element of the network element type. When determining that the application function network element is allowed to obtain the energy information, the network exposure function network element obtains the energy information from the first communication apparatus, and sends the energy information to the application function network element. This facilitates secure openness of energy information of a network element type of an operator network.

The following describes the communication method in embodiments of this application with reference to FIG. 5 by using an example in which a type of energy information is a network type and a first identifier is identification information of a network.

FIG. 5 is a schematic flowchart of yet another communication method 500 according to an embodiment of this application. The method 500 includes S501 to S510, and specific steps are as follows:
S501. An application function network element sends a first request message to a network exposure function network element. The first request message includes first identification information, the first request message is used to request energy information, and the energy information indicates energy consumed by at least one network element corresponding to the first identification information. Correspondingly, the network exposure function network element receives the first request message.

In this embodiment of this application, the first identification information includes identification information of a network, for example, identification information of a 5G network or identification information of a network of a campus. The at least one network element corresponding to the first identification information is a network element in the network, and there is one or more network elements in the network.

Optionally, the first identification information further includes a second identifier, and the second identifier is identification information of a network element type. In other words, the first identification information further includes the identification information of the network element type. In this case, the at least one network element corresponding to the first identification information is a network element of the network element type in the network.

After S501, the network exposure function network element performs the following S502-A, or the network exposure function network element performs the following S502-B, S503-B, and S504-B.

S502-A. The network exposure function network element determines, depending on whether the identification information of the network belongs to a third list, whether the application function network element is allowed to obtain the energy information.

In this embodiment of this application, the network exposure function network element stores the third list, the third list includes identification information of one or more networks, and the application function network element is allowed to obtain information indicating energy consumed by a network element in the one or more networks.

When the identification information of the network belongs to the third list, the network exposure function network element determines that the application function network element is allowed to obtain the energy information, and then performs S505.

Optionally, when the first identification information further includes the identification information of the network element type, S502-A includes: The network exposure function network element determines, depending on whether the identification information of the network belongs to the third list and whether an identifier of the network element type belongs to a second list, whether the application function network element is allowed to obtain the energy information.

In this embodiment of this application, the network exposure function network element further stores the second list, the second list includes identification information of one or more network element types, and the application function network element is allowed to obtain information indicating energy consumed by a network element of the one or more network element types.

When the identification information of the network belongs to the third list, and the identification information of the network element type belongs to the second list, the network exposure function network element determines that the application function network element is allowed to obtain the energy information, and then performs S505.

S502-B. The network exposure function network element sends a seventh request message to a second communication apparatus network element. The seventh request message includes the identification information of the network, and the seventh request message is used to request identification information of the network element in the network. Correspondingly, the second communication apparatus receives the seventh request message.

S503-B. The second communication apparatus sends the identification information of the network element in the network to the network exposure function network element. Correspondingly, the network exposure function network element receives the identification information of the network element in the network.

In S502-B and S503-B, the second communication apparatus is a network repository function network element and/or an access network management system. The network repository function network element sends identification information of a core network element in the network to the network exposure function network element based on the seventh request message; and/or the access network management system sends identification information of an access network element in the network to the network exposure function network element based on the seventh request message.

S504-B. The network exposure function network element determines, depending on whether the identification information of the network element in the network belongs to a fifth list, whether the application function network element is allowed to obtain the energy information. For descriptions of the fifth list, refer to the foregoing descriptions of S404-B. Details are not described herein again.

Optionally, when the first identification information further includes the identification information of the network element type, the seventh request message in S502-B further includes the identifier of the network element type, and the seventh request message is used to request identification information of the network element of the network element type in the network. Correspondingly, in S503-B, the network repository function network element sends the identification information of the network element of the network element type in the network to the network exposure function network element based on the seventh request message. Correspondingly, S504-B includes: The network exposure function network element determines, depending on whether the identification information of the network element of the network element type in the network belongs to the fifth list, whether the application function network element is authorized to obtain the energy information. When the identification information of the network element of the network element type in the network belongs to the fifth list, the network exposure function network element determines that the application function network element is authorized to obtain the energy information.

S505. The network exposure function network element sends a second request message to a first communication apparatus. The second request message is used to request the energy information. Correspondingly, the first communication apparatus receives the second request message.

In this embodiment of this application, the second request message includes the identification information of the network or the identification information of the network element in the network.

In this embodiment of this application, the network element in the network is a network element instance in the network, and the identification information of the network element in the network is identification information of the network element instance in the network.

With reference to the foregoing descriptions of S502-A, the network exposure function network element does not obtain the identification information of the network element in the network. Therefore, the second request message includes the identification information of the network. Subsequently, the first communication apparatus obtains the identification information of the network element in the network from the network repository function network element based on the identification information of the network.

With reference to the foregoing descriptions of S502-B and S503-B, the network exposure function network element obtains the identification information of the network element in the network. Therefore, the second request message includes the identification information of the network element in the network. Optionally, the second request message further includes the identification information of the network.

Optionally, when the first identification information further includes the identification information of the network element type, with reference to the foregoing descriptions of S502-A, the second request message includes the identification information of the network and the identification information of the network element type. Alternatively, with reference to the foregoing descriptions of S502-B and S503-B, the second request message includes the identification information of the network element of the network element type in the network.

S506. The first communication apparatus generates the energy information based on energy consumed by the network element in the network.

If the second request message does not include the identification information of the network element in the network, before this step, the first communication apparatus needs to obtain the identification information of the network element in the network from the network repository function network element, and obtain, based on the identification information of the network element in the network, the energy consumed by the network element in the network element. Then, the first communication apparatus generates the energy information based on the energy consumed by the network element in the network.

Optionally, when the first identification information further includes the identification information of the network element type, S506 includes: The first communication apparatus generates the energy information based on energy consumed by the network element of the network element type in the network.

S507. The first communication apparatus sends the energy information to the network exposure function network element. Correspondingly, the network exposure function network element receives the energy information.

S508. The network exposure function network element sends the energy information to the application function network element. Correspondingly, the application function network element receives the energy information.

Optionally, after receiving the energy information, the network exposure function network element deletes sensitive data in the energy information, for example, a network element instance identifier. The network element instance identifier is an internal identifier of a network element.

Optionally, before S505, the method 500 further includes S509: The network exposure function network element sends a third request message to a network repository function network element. The third request message is used to request authorization for obtaining the energy information. Correspondingly, the network repository function network element receives the third request message. In this embodiment of this application, the third request message includes the identification information of the network or the identification information of the network element in the network.

Optionally, after receiving the third request message, the network repository function network element determines whether the first communication apparatus allows the network exposure function network element to obtain the energy information. When it is determined that the first communication apparatus allows the network exposure function network element to obtain the energy information, the method 500 further includes S510: The network repository function network element sends a second authorization token to the network exposure function network element. The second authorization token includes the identification information of the network or the identification information of the network element in the network, the second authorization token indicates energy information that the first communication apparatus authorizes the network exposure function network element to obtain, and the energy information that the first communication apparatus authorizes the network exposure function network element to obtain indicates the energy consumed by the network element in the network.

Optionally, the second request message in S505 includes the second authorization token, and the second authorization token includes the identification information of the network element type or the identification information of the network element of the network element type. After receiving the second request message, the first communication apparatus checks whether a signature of the second authorization token is valid. When the check succeeds, the first communication apparatus performs S506.

Optionally, when the first identification information further includes the identification information of the network element type, the third request message in S509 includes the identification information of the network and the identification information of the network element type. Alternatively, the third request message in S509 includes the identification information of the network element of the network element type in the network. Correspondingly, the second authorization token in S510 includes the identification information of the network and the identification information of the network element type. Alternatively, the second authorization token in S508 includes the identification information of the network element of the network element type in the network.

In this embodiment of this application, the application function network element requests the energy information. The energy information indicates the energy consumed by the network element in the network. When determining that the application function network element is allowed to obtain the energy information, the network exposure function network element obtains the energy information from the first communication apparatus, and sends the energy information to the application function network element. This facilitates secure openness of energy information of a network type of an operator network.

The following describes the communication method in embodiments of this application with reference to FIG. 6 by using an example in which a type of energy information is a slice type and a first identifier is identification information of a slice.

FIG. 6 is a schematic flowchart of yet another communication method 600 according to an embodiment of this application. The method 600 includes S601 to S610, and specific steps are as follows:
S601. An application function network element sends a first request message to a network exposure function network element. The first request message includes first identification information, the first request message is used to request energy information, and the energy information indicates energy consumed by at least one network element corresponding to the first identification information. Correspondingly, the network exposure function network element receives the first request message.

In this embodiment of this application, the first identification information includes identification information of a slice. The at least one network element corresponding to the first identification information is a network element serving the slice, and there is one or more network elements serving the slice.

Optionally, the first identification information further includes a second identifier, and the second identifier is identification information of a network element type. In other words, the first identification information further includes the identification information of the network element type. In this case, the at least one network element corresponding to the first identification information is a network element of the network element type that serves the slice.

After S601, the network exposure function network element performs the following S602-A, or the network exposure function network element performs the following S602-B, S603-B, and S604-B.

S602-A. The network exposure function network element determines, depending on whether the identification information of the slice belongs to a fourth list, whether the application function network element is allowed to obtain the energy information.

In this embodiment of this application, the network exposure function network element stores the fourth list, the fourth list includes identification information of one or more slices, and the application function network element is allowed to obtain information indicating energy consumed by a network element serving the one or more slices.

When the identification information of the slice belongs to the fourth list, the network exposure function network element determines that the application function network element is allowed to obtain the energy information, and then performs S605.

Optionally, when the first identification information further includes the identification information of the network element type, S602-A includes: The network exposure function network element determines, depending on whether the identification information of the slice belongs to the fourth list and whether an identifier of the network element type belongs to a second list, whether the application function network element is allowed to obtain the energy information. For descriptions of the second list, refer to the foregoing descriptions of S402-A. Details are not described herein again.

When the identification information of the network belongs to the fourth list, and the identification information of the network element type belongs to the second list, the network exposure function network element determines that the application function network element is allowed to obtain the energy information, and then performs S605.

S602-B. The network exposure function network element sends an eighth request message to a second communication apparatus. The eighth request message includes the identification information of the slice, and the eighth request message is used to request identification information of the network element serving the slice. Correspondingly, the second communication apparatus receives the eighth request message.

S603-B. The second communication apparatus sends the identification information of the network element serving the slice to the network exposure function network element. Correspondingly, the network exposure function network element receives the identification information of the network element serving the slice.

In S602-B and S603-B, the second communication apparatus is a network repository function network element and/or an access network management system. The network repository function network element sends identification information of a core network element serving the slice to the network exposure function network element based on the eighth request message; and/or the access network management system sends identification information of an access network element serving the slice to the network exposure function network element based on the eighth request message.

S604-B. The network exposure function network element determines, depending on whether the identification information of the network element serving the slice belongs to a fifth list, whether the application function network element is allowed to obtain the energy information. For descriptions of the fifth list, refer to the foregoing descriptions of S404-B. Details are not described herein again.

Optionally, when the first identification information further includes the identification information of the network element type, the eighth request message in S602-B further includes the identifier of the network element type, and the eighth request message is used to request identification information of the network element of the network element type that serves the slice. Correspondingly, in S603-B, the network repository function network element sends the identification information of the network element of the network element type that serves the slice to the network exposure function network element based on the eighth request message. Correspondingly, S604-B includes: The network exposure function network element determines, depending on whether the identification information of the network element of the network element type that serves the slice belongs to the fifth list, whether the application function network element is authorized to obtain the energy information. When the identification information of the network element of the network element type that serves the slice belongs to the fifth list, the network exposure function network element determines that the application function network element is authorized to obtain the energy information.

S605. The network exposure function network element sends a second request message to a first communication apparatus. The second request message is used to request the energy information. Correspondingly, the first communication apparatus receives the second request message.

In this embodiment of this application, the second request message includes the identification information of the slice or the identification information of the network element serving the slice.

In this embodiment of this application, the network element serving the slice is a network element instance serving the slice, and the identification information of the network element serving the slice is identification information of the network element instance serving the slice.

With reference to the foregoing descriptions of S602-A, the network exposure function network element does not obtain the identification information of the network element serving the slice. Therefore, the second request message includes the identification information of the slice. Subsequently, the first communication apparatus obtains the identification information of the network element serving the slice from the network repository function network element based on the identification information of the slice.

With reference to the foregoing descriptions of S602-B and S603-B, the network exposure function network element obtains the identification information of the network element in the slice. Therefore, the second request message includes the identification information of the network element serving the slice. Optionally, the second request message further includes the identification information of the slice.

Optionally, when the first identification information further includes the identification information of the network element type, with reference to the foregoing descriptions of S602-A, the second request message includes the identification information of the slice and the identification information of the network element type. Alternatively, with reference to the foregoing descriptions of S602-B and S603-B, the second request message includes the identification information of the network element of the network element type that serves the slice.

S606. The first communication apparatus generates the energy information based on energy consumed by the network element serving the slice.

If the second request message does not include the identification information of the network element serving the slice, before this step, the first communication apparatus needs to obtain the identification information of the network element serving the slice from the network repository function network element, and obtain, based on the identification information of the network element serving the slice, the energy consumed by the network element serving the slice. Further, the first communication apparatus generates the energy information based on the energy consumed by the network element serving the slice.

Optionally, when the first identification information further includes the identification information of the network element type, S606 includes: The first communication apparatus generates the energy information based on energy consumed by the network element of the network element type that serves the slice.

S607. The first communication apparatus sends the energy information to the network exposure function network element. Correspondingly, the network exposure function network element receives the energy information.

S608. The network exposure function network element sends the energy information to the application function network element. Correspondingly, the application function network element receives the energy information.

Optionally, after receiving the energy information, the network exposure function network element deletes sensitive data in the energy information, for example, a network element instance identifier. The network element instance identifier is an internal identifier of a network element.

Optionally, before S605, the method 600 further includes S609: The network exposure function network element sends a third request message to a network repository function network element. The third request message is used to request authorization for obtaining the energy information. Correspondingly, the network repository function network element receives the third request message. In this embodiment of this application, the third request message includes the identification information of the slice or the identification information of the network element serving the slice.

Optionally, after receiving the third request message, the network repository function network element determines whether the first communication apparatus allows the network exposure function network element to obtain the energy information. When it is determined that the first communication apparatus allows the network exposure function network element to obtain the energy information, the method 600 further includes S610: The network repository function network element sends a second authorization token to the network exposure function network element. The second authorization token includes the identification information of the slice or the identification information of the network element serving the slice, the second authorization token indicates energy information that the first communication apparatus authorizes the network exposure function network element to obtain, and the energy information that the first communication apparatus authorizes the network exposure function network element to obtain indicates the energy consumed by the network element serving the slice.

Optionally, the second request message in S605 includes the second authorization token, and the second authorization token includes the identification information of the slice or the identification information of the network element serving the slice. After receiving the second request message, the first communication apparatus checks whether a signature of the second authorization token is valid. When the check succeeds, the first communication apparatus performs S606.

Optionally, when the first identification information further includes the identification information of the network element type, the third request message in S609 includes the identification information of the slice and the identification information of the network element type. Alternatively, the third request message in S609 includes the identification information of the network element of the network element type that serves the slice. Correspondingly, the second authorization token in S610 includes the identification information of the slice and the identification information of the network element type. Alternatively, the second authorization token in S610 includes the identification information of the network element of the network element type that serves the slice.

In this embodiment of this application, the application function network element requests the energy information. The energy information indicates the energy consumed by the network element serving the slice. When determining that the application function network element is allowed to obtain the energy information, the network exposure function network element obtains the energy information from the first communication apparatus, and sends the energy information to the application function network element. This facilitates secure openness of energy information of a slice type of an operator network.

It should be understood that, sequence numbers of the foregoing processes do not mean a particular execution sequence. The execution sequence of the processes should be determined based on functions and internal logic of the processes, and should not be construed as any limitation on implementation processes of embodiments of this application.

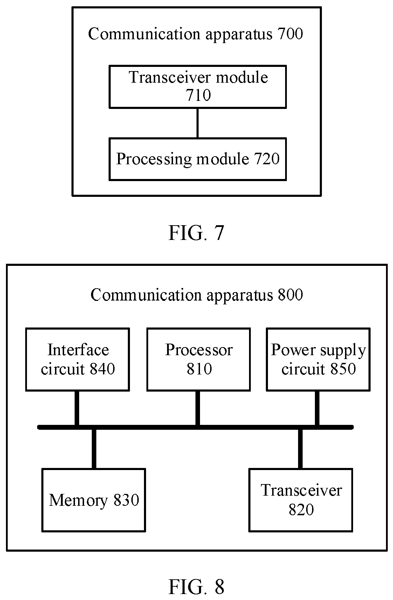

The foregoing describes in detail the communication method according to embodiments of this application with reference to FIG. 2 to FIG. 6. The following describes in detail a communication apparatus according to embodiments of this application with reference to FIG. 7 and FIG. 8.

FIG. 7 is a block diagram of a communication apparatus 700 according to an embodiment of this application. The apparatus 700 includes a transceiver module 710 and a processing module 720.

The processing module 720 is configured to process data. The transceiver module 710 may implement a corresponding communication function. The transceiver module 710 may also be referred to as a communication interface or a communication module.

Optionally, the apparatus 700 may further include a storage module. The storage module may be configured to store data and/or a computer program or instructions. The processing module 720 may read the computer program/instructions and/or the data in the storage module, to enable the apparatus 700 to implement the foregoing method embodiments.

The apparatus 700 may be configured to perform actions performed by the first communication apparatus or the second network element in the foregoing method embodiments. Alternatively, the apparatus 700 is a component (for example, a chip) configured in the first communication apparatus or the second network element. The processing module 720 is configured to perform processing related operations of the first communication apparatus or the second network element in the foregoing method embodiments. The transceiver module 710 is configured to perform receiving and sending related operations of the first communication apparatus or the second network element in the foregoing method embodiments.

In this embodiment of this application, the first communication apparatus is, for example, an NFp or OAM functional entity, and the second network element is, for example, a network exposure function network element.

Optionally, the transceiver module 710 may include a sending module and a receiving module. The sending module is configured to perform sending operations in the foregoing method embodiments. The receiving module is configured to perform receiving operations in the foregoing method embodiments.

It should be noted that the apparatus 700 may include the sending module but does not include the receiving module. Alternatively, the apparatus 700 may include the receiving module but does not include the sending module. This may specifically depend on whether the foregoing solution performed by the apparatus 700 includes a sending action and a receiving action.

Optionally, the apparatus 700 is configured to perform actions performed by the first communication apparatus or the second network element in the embodiments shown in FIG. 2 to FIG. 6. For details, refer to related descriptions in the embodiments shown in FIG. 2 to FIG. 6. Details are not described herein again.

In an embodiment, the transceiver module 710 is configured to receive a first request message from a first network element. The first request message includes first identification information, the first request message is used to request energy information, and the energy information indicates energy consumed by at least one network element corresponding to the first identification information. The processing module 720 is configured to determine, based on the first identification information, whether the first network element is allowed to obtain the energy information. The transceiver module 710 is further configured to send the energy information to the first network element when the first network element is allowed to obtain the energy information.

Optionally, the first identification information includes identification information of a first terminal device, and the at least one network element corresponding to the first identification information is a network element serving the first terminal device.

Optionally, the identification information of the first terminal device is a globally unique temporary identity of the first terminal device. The processing module 720 is configured to determine, based on a subscription permanent identifier of the first terminal device corresponding to the globally unique temporary identity of the first terminal device, whether the first network element is allowed to obtain the energy information.

Optionally, the processing module 720 is configured to determine, depending on whether the subscription permanent identifier of the first terminal device belongs to a first list, whether the first network element is allowed to obtain the energy information. The first list includes a subscription permanent identifier of one or more terminal devices, and the first network element is allowed to obtain information indicating energy consumed by a network element serving the one or more terminal devices.

Optionally, the first request message includes a first authorization token, the first authorization token includes terminal identification information, the first authorization token indicates energy information that the first network element is authorized to obtain, and the energy information that the first network element is authorized to obtain indicates energy consumed by a network element serving a terminal device corresponding to the terminal identification information. The processing module 720 is configured to determine, depending on whether the terminal identification information is consistent with the identification information of the first terminal device, whether the first network element is allowed to obtain the energy information.

Optionally, the first identification information includes identification information of a network element type, and the at least one network element corresponding to the first identification information is a network element of the network element type.

Optionally, the processing module 720 is configured to determine, depending on whether the identification information of the network element type belongs to a second list, whether the first network element is authorized to obtain the energy information. The second list includes identification information of one or more network element types, and the first network element is allowed to obtain information indicating energy consumed by a network element of the one or more network element types.

Optionally, the first identification information includes identification information of a network, and the at least one network element corresponding to the first identification information is a network element in the network.

Optionally, the processing module 720 is configured to determine, depending on whether the identification information of the network belongs to a third list, whether the first network element is allowed to obtain the energy information. The third list includes identification information of one or more networks, and the first network element is allowed to obtain information indicating energy consumed by a network element in the one or more networks.

Optionally, the first identification information includes identification information of a slice, and the at least one network element corresponding to the first identification information is a network element serving the slice.

Optionally, the processing module 720 is configured to determine, depending on whether the identification information of the slice belongs to a fourth list, whether the first network element is allowed to obtain the energy information. The fourth list includes identification information of one or more slices, and the first network element is allowed to obtain information indicating energy consumed by a network element serving the one or more slices.

Optionally, that the processing module 720 is configured to determine, based on the first identification information, whether the first network element is allowed to obtain the energy information includes: determining, depending on whether identification information of the at least one network element corresponding to the first identification information belongs to a fifth list, whether the first network element is allowed to obtain the energy information. The fifth list includes identification information of one or more network elements, and the first network element is allowed to obtain information indicating energy consumed by the one or more network elements.

Optionally, the transceiver module 710 is configured to: send a second request message to a first communication apparatus when the first network element is allowed to obtain the energy information, where the second request message is used to request the energy information, and the second request message includes the first identification information or the identification information of the at least one network element corresponding to the first identification information; and receive the energy information from the first communication apparatus.

Optionally, the second request message includes a second authorization token, the second authorization token includes the first identification information or the identification information of the at least one network element corresponding to the first identification information, the second authorization token indicates energy information that the first communication apparatus authorizes a second network element to obtain, and the energy information that the second network element is authorized to obtain indicates the energy consumed by the at least one network element corresponding to the first identification information.

Optionally, the transceiver module 710 is configured to: send a third request message to a third network element, where the third request message includes the first identification information or the identification information of the at least one network element corresponding to the first identification information, and the third request message is used to request authorization for obtaining the energy information; and receive the second authorization token from the third network element. The third network element may be specifically the network repository function network element in the foregoing embodiments.

In this embodiment, a person skilled in the art may understand that the apparatus 700 may be specifically the second network element in the embodiments shown in FIG. 2 to FIG. 6, or a function of the second network element in the embodiments shown in FIG. 2 to FIG. 6 may be integrated into the apparatus 700. The function may be implemented by hardware, or may be implemented by hardware executing corresponding software. The hardware or the software includes one or more modules corresponding to the function. The apparatus 700 may be configured to perform procedures and/or steps corresponding to the second network element in the foregoing method embodiments.

In another possible embodiment, the transceiver module 710 is configured to receive a second request message from a second network element. The second request message is used to request energy information, and the second request message includes first identification information or identification information of at least one network element corresponding to the first identification information. The processing module 720 is configured to generate the energy information based on energy consumed by the at least one network element corresponding to the first identification information. The transceiver module 710 is further configured to send the energy information to the second network element. The second network element may be specifically the foregoing network exposure function network element.

Optionally, the first identification information includes identification information of a first terminal device, and the at least one network element corresponding to the first identification information is a network element serving the first terminal device.

Optionally, the first identification information includes a network element type, and the at least one network element corresponding to the first identification information is a network element of the network element type.

Optionally, the first identification information includes identification information of a network, and the at least one network element corresponding to the first identification information is a network element in the network.

Optionally, the first identification information includes identification information of a slice, and the at least one network element corresponding to the first identification information is a network element serving the slice.

Optionally, the second request message includes a second authorization token, the second authorization token includes the first identification information or the identification information of the at least one network element corresponding to the first identification information, the second authorization token indicates energy information that the first communication apparatus authorizes the second network element to obtain, and the energy information that the second network element is authorized to obtain indicates the energy consumed by the at least one network element corresponding to the first identification information.

In this embodiment, a person skilled in the art may understand that the apparatus 700 may be specifically the first communication apparatus in the embodiments shown in FIG. 2 to FIG. 6, or a function of the first communication apparatus in the embodiments shown in FIG. 2 to FIG. 6 may be integrated into the apparatus 700. The function may be implemented by hardware, or may be implemented by hardware executing corresponding software. The hardware or the software includes one or more modules corresponding to the function. The apparatus 700 may be configured to perform procedures and/or steps corresponding to the first communication apparatus in the foregoing method embodiments.

It should be understood that, the apparatus 700 herein is presented in a form of functional modules. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

In this embodiment of this application, the apparatus 700 may alternatively be a chip or a chip system, for example, a system on chip (system on chip, SoC). Correspondingly, the transceiver module may be a transceiver circuit of the chip. This is not limited herein.

FIG. 8 is a block diagram of another communication apparatus 800 according to an embodiment of this application. The communication apparatus 800 includes a processor 810, a transceiver 820, and a memory 830. The processor 810, the transceiver 820, and the memory 830 communicate with each other by using an internal connection path. The memory 830 is configured to store instructions. The processor 810 is configured to execute the instructions stored in the memory 830, to control the transceiver 820 to send a signal and/or receive a signal.

Optionally, the communication apparatus 800 further includes an interface circuit 840, which may be configured for data and/or signaling transmission. The processor 810 and the interface circuit 840 are coupled to each other. It may be understood that the interface circuit 840 may be a transceiver, an input/output circuit, a bus, a module, a pin, or a communication interface of another type. In the input/output circuit, an input circuit may be configured to receive data, and an output interface may be configured to send data.

Optionally, the communication apparatus 800 further includes a power supply circuit 850, and the power supply circuit 850 may be configured to supply power to the communication apparatus 800.

It should be understood that the apparatus 800 may be specifically the first communication apparatus or the second network element in the foregoing embodiments, or a function of the first communication apparatus or the second network element in the foregoing embodiments may be integrated into the apparatus 800. The apparatus 800 may be configured to perform steps and/or procedures corresponding to the first communication apparatus or the second network element in the foregoing method embodiments. Optionally, the memory 830 may include a read-only memory and a random access memory, and provide instructions and data to the processor. A part of the memory may further include a non-volatile random access memory. For example, the memory may further store information about a device type. The processor 810 may be configured to execute the instructions stored in the memory. When executing the instructions, the processor 810 may perform steps and/or procedures corresponding to the first communication apparatus or the second network element in the foregoing method embodiments.

It should be understood that in this embodiment of this application, the processor may be a central processing unit (central processing unit, CPU), or the processor may be another general-purpose processor, a digital signal processor (digital signal processor, DSP), an ASIC, a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

In an implementation process, steps in the foregoing method may be completed by using a hardware integrated logical circuit in the processor or instructions in a form of software. The steps of the method disclosed with reference to embodiments of this application may be directly completed by a hardware processor, or may be completed by using a combination of hardware in the processor and a software module. The software module may be located in a storage medium mature in the art, such as a random access memory, a flash memory, a read-only memory, a programmable read-only memory, an electrically erasable programmable memory, or a register. The storage medium is located in the memory. The processor executes the instructions in the memory, to complete steps of the foregoing methods in combination with hardware thereof. To avoid repetition, details are not described herein again.

A person of ordinary skill in the art may be aware that, with reference to the examples described in the embodiments disclosed in this specification, modules and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenient and brief description, for a detailed working process of the foregoing system, apparatus, and module, refer to a corresponding process in the foregoing method embodiments. Details are not described herein again.

In the several embodiments provided in this application, it should be understood that the disclosed system, apparatus, and method may be implemented in other manners. For example, the apparatus embodiment described above is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one place, or may be distributed on a plurality of network modules. A part of or all the modules may be selected based on actual needs to achieve objectives of the solutions of the embodiments.

In addition, functional modules in embodiments of this application may be integrated into one processing module, or each module may exist alone physically, or two or more modules may be integrated into one module.

When the functions are implemented in a form of a software functional module and sold or used as an independent product, the functions may be stored in a computer-readable storage medium. Based on such an understanding, the technical solutions of this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes various media that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving a first request message from a first network element, wherein the first request message comprises first identification information, the first request message is used to request energy information, and the energy information indicates energy consumed by at least one network element corresponding to the first identification information;
determining, based on the first identification information, whether the first network element is allowed to obtain the energy information; and
sending the energy information to the first network element when the first network element is allowed to obtain the energy information.

2. The method according to claim 1, wherein the first identification information comprises identification information of a first terminal device, and the at least one network element corresponding to the first identification information is a network element serving the first terminal device.

3. The method according to claim 2, wherein the identification information of the first terminal device is a globally unique temporary identity of the first terminal device; and
the determining, based on the first identification information, whether the first network element is allowed to obtain the energy information comprises:
determining, based on a subscription permanent identifier of the first terminal device corresponding to the globally unique temporary identity of the first terminal device, whether the first network element is allowed to obtain the energy information.

4. The method according to claim 3, wherein the determining, based on the subscription permanent identifier of the first terminal device corresponding to the globally unique temporary identity of the first terminal device, whether the first network element is allowed to obtain the energy information comprises:
determining, depending on whether the subscription permanent identifier of the first terminal device belongs to a first list, whether the first network element is allowed to obtain the energy information, wherein the first list comprises a subscription permanent identifier of one or more terminal devices, and the first network element is allowed to obtain information indicating energy consumed by a network element serving the one or more terminal devices.

5. The method according to any one of claims 2 to 4, wherein the first request message comprises a first authorization token, the first authorization token comprises terminal identification information, the first authorization token indicates energy information that the first network element is authorized to obtain, and the energy information that the first network element is authorized to obtain indicates energy consumed by a network element serving a terminal device corresponding to the terminal identification information; and
the determining, based on the first identification information, whether the first network element is allowed to obtain the energy information comprises:
determining, depending on whether the terminal identification information is consistent with the identification information of the first terminal device, whether the first network element is allowed to obtain the energy information.

6. The method according to claim 1, wherein the first identification information comprises identification information of a network element type, and the at least one network element corresponding to the first identification information is a network element of the network element type.

7. The method according to claim 6, wherein the determining, based on the first identification information, whether the first network element is allowed to obtain the energy information comprises:
determining, depending on whether the identification information of the network element type belongs to a second list, whether the first network element is authorized to obtain the energy information, wherein the second list comprises identification information of one or more network element types, and the first network element is allowed to obtain information indicating energy consumed by a network element of the one or more network element types.

8. The method according to claim 1, wherein the first identification information comprises identification information of a network, and the at least one network element corresponding to the first identification information is a network element in the network.

9. The method according to claim 8, wherein the determining, based on the first identification information, whether the first network element is allowed to obtain the energy information comprises:
determining, depending on whether the identification information of the network belongs to a third list, whether the first network element is allowed to obtain the energy information, wherein the third list comprises identification information of one or more networks, and the first network element is allowed to obtain information indicating energy consumed by a network element in the one or more networks.

10. The method according to claim 1, wherein the first identification information comprises identification information of a slice, and the at least one network element corresponding to the first identification information is a network element serving the slice.

11. The method according to claim 10, wherein the determining, based on the first identification information, whether the first network element is allowed to obtain the energy information comprises:
determining, depending on whether the identification information of the slice belongs to a fourth list, whether the first network element is allowed to obtain the energy information, wherein the fourth list comprises identification information of one or more slices, and the first network element is allowed to obtain information indicating energy consumed by a network element serving the one or more slices.

12. The method according to claim 1, 2, 6, 8, or 10, wherein the determining, based on the first identification information, whether the first network element is allowed to obtain the energy information comprises:
determining, depending on whether identification information of the at least one network element corresponding to the first identification information belongs to a fifth list, whether the first network element is allowed to obtain the energy information, wherein the fifth list comprises identification information of one or more network elements, and the first network element is allowed to obtain information indicating energy consumed by the one or more network elements.

13. The method according to any one of claims 1 to 12, wherein the method further comprises:
sending a second request message to the first communication apparatus when the first network element is allowed to obtain the energy information, wherein the second request message is used to request the energy information, and the second request message comprises the first identification information or the identification information of the at least one network element corresponding to the first identification information; and
receiving the energy information from the first communication apparatus.

14. The method according to claim 13, wherein the second request message comprises a second authorization token, the second authorization token comprises the first identification information or the identification information of the at least one network element corresponding to the first identification information, the second authorization token indicates energy information that the first communication apparatus authorizes a second network element to obtain, and the energy information that the second network element is authorized to obtain indicates the energy consumed by the at least one network element corresponding to the first identification information.

15. The method according to claim 14, wherein before the sending the second request message to the first communication apparatus, the method further comprises:
sending a third request message to a third network element, wherein the third request message comprises the first identification information or the identification information of the at least one network element corresponding to the first identification information, and the third request message is used to request authorization for obtaining the energy information; and
receiving the second authorization token from the third network element.

16. A communication method, wherein the method comprises:
receiving a second request message from a second network element, wherein the second request message is used to request energy information, and the second request message comprises first identification information or identification information of at least one network element corresponding to the first identification information;
generating the energy information based on energy consumed by the at least one network element corresponding to the first identification information; and
sending the energy information to the second network element.

17. The method according to claim 16, wherein the first identification information comprises identification information of a first terminal device, and the at least one network element corresponding to the first identification information is a network element serving the first terminal device.

18. The method according to claim 16, wherein the first identification information comprises a network element type, and the at least one network element corresponding to the first identification information is a network element of the network element type.

19. The method according to claim 16, wherein the first identification information comprises identification information of a network, and the at least one network element corresponding to the first identification information is a network element in the network.

20. The method according to claim 16, wherein the first identification information comprises identification information of a slice, and the at least one network element corresponding to the first identification information is a network element serving the slice.

21. The method according to any one of claims 16 to 20, wherein the second request message comprises a second authorization token, the second authorization token comprises the first identification information or the identification information of the at least one network element corresponding to the first identification information, the second authorization token indicates energy information that a first communication apparatus authorizes the second network element to obtain, and the energy information that the second network element is authorized to obtain indicates the energy consumed by the at least one network element corresponding to the first identification information.

22. A communication apparatus, comprising a module configured to perform the method according to any one of claims 1 to 15, or a module configured to perform the method according to any one of claims 16 to 21.

23. A communication apparatus, comprising a processor, wherein the processor is coupled to a memory, the memory is configured to store a program or instructions, and when the program or the instructions are executed by the processor, the method according to any one of claims 1 to 15 is performed, or the method according to any one of claims 16 to 21 is performed.

24. A computer-readable storage medium, configured to store a computer program, wherein when the computer program is run on a computer, the method according to any one of claims 1 to 15 is performed, or the method according to any one of claims 16 to 21 is performed.

25. A computer program product, comprising a computer program or instructions, wherein when the computer program or the instructions are run, the method according to any one of claims 1 to 15 is performed, or the method according to any one of claims 16 to 21 is performed.
